# FASCICULE DE BREVET EUROPEEN

(11) **EP 1 066 142 B1**
(45) Date de publication et mention de la délivrance du brevet: **08.10.2003**
(21) Numéro de dépôt: 98904228.8
(22) Date de dépôt: 27.01.1998
(51) Int. Cl.: B29C 33/36

(54) **INSTALLATION DE FABRICATION D'OBJETS EN LATEX PAR EXEMPLE DES OREILLERS**
EINRICHTUNG ZUR HERSTELLUNG VON LATEXGEGENSTÄNDEN, WIE BEISPIELWEISE KISSEN
FACILITY FOR PRODUCING LATEX OBJECTS SUCH AS PILLOWS

(43) Date de publication de la demande: 10.01.2001
(73) Titulaire: Biotex S.A., 31780 Castelginest (FR)
(72) Inventeur: PETIT, Patrick, F-31840 Seilh (FR); UBANELL, Georges, F-31500 Toulouse (FR)
(74) Mandataire: Ravina, Bernard
(86) Numéro de dépôt international: FR9800144
(87) Numéro de publication internationale: WO99037455

(56) Documents cités:
- DE-A- 2 923 482
- FR-A- 2 684 591
- US-A- 2 755 505
- US-A- 4 560 346
- US-A- 4 961 888
- US-A- 5 229 138

## Description

La présente invention a pour objet une installation de fabrication d'articles en latex d'épaisseur constante ou variable tels des oreillers, des traversins, des coussins, des matelas etc.
On connaît déjà du US-A-5229 138 une installation de fabrication d'articles en mousse de latex comprenant une paroi déformable, agencée en boucle fermée formant en partie supérieure surface de moulage, entraînée sur elle-même d'abord au travers d'un poste de pose de mousse de latex, puis au travers d'un vulcanisateur à tunnel et enfin au travers d'un poste de retrait du produit vulcanisé. Par la suite, la bande de mousse obtenue est découpée en articles individuels et ces derniers subissent des opérations de lavage et de séchage avant conditionnement en vue de leur commercialisation.
Un des inconvénients de cette installation est qu'elle ne permet pas l'obtention d'articles finis en sortie du tunnel de vulcanisation. Par ailleurs elle est principalement conçue pour la fabrication d'objets d'épaisseur constante et ne peut être utilisée pour la fabrication d'oreillers et de matelas avec formes destinées à épouser les contours anatomiques. Un autre inconvénient de ce type d'installation tient au principe de fabrication en continu. En effet ce mode de fabrication requiert l'usage d'un four ouvert aux deux extrémités dans lequel il est difficile de vulcaniser les produits sous forte pression de vapeur et, pour cette raison, le temps de séjour de la mousse dans le four est relativement long.
La présente invention a pour objet de résoudre les problèmes sus évoqués en mettant en oeuvre une installation de fabrication d'articles en latex qui permette une diminution conséquente du temps de séjour des articles dans le four ce qui accroît grandement les cadences de fabrication.
Un autre objet de la présente invention est la mise en oeuvre d'une installation qui puisse être utilisée pour la fabrication d'articles de formes et de tailles différentes, d'épaisseur variables ou constante.
A cet effet l'installation selon l'invention, pour la fabrication d'articles moulés en latex d'épaisseur constante ou variable, comprenant des moules dans chacun desquels est destinée à être introduite une mousse de latex, un four du type autoclave, dans la chambre de vulcanisation duquel sont destinés à être introduits les moules en vue de la vulcanisation de la mousse de latex qu'ils contiennent et en vue de la formation des articles, ladite installation comprenant de plus un poste de remplissage des moules en mousse de latex, un poste d'extraction des articles de leurs moules et une unité de lavage et une unité de séchage des articles démoulés se caractérise essentiellement en ce que :
- la chambre de vulcanisation du four est délimitée par une enveloppe maintenue à distance des parois latérales et supérieure du four, posée sur la paroi inférieure du four, ladite enveloppe délimitant avec les dites parois latérales et supérieure une enceinte en communication avec la chambre de vulcanisation par des passages ménagés en partie inférieure de l'enceinte,
- l'enceinte est obturée en extrémité,
- le four présente en partie supérieure au moins une bouche d'introduction de vapeur d'eau sous pression et température élevées et en partie inférieure au moins une bouche d'extraction de la vapeur et d'évacuation de l'eau condensée ladite bouche d'introduction étant en communication avec l'enceinte formée autour de la chambre de vulcanisation,
- la chambre de vulcanisation comprend une ouverture de chargement et une ouverture de déchargement, opposées, obturables chacune par une porte à mouvements d'ouverture et fermeture commandés.

L'enceinte ménagée autour de la chambre de vulcanisation autorise une introduction à grande vitesse de la vapeur dans le four pour un remplissage rapide et ce en écartant le risque que le flux de vapeur en sortie de la bouche d'introduction vienne frapper directement les moules présents dans la chambre et disposés sur sa trajectoire, ce qui est garant d'une vulcanisation uniforme.
L'enveloppe délimitant la chambre de vulcanisation constitue un moyen de déflexion du flux de vapeur.

L'installation selon l'invention se caractérise en outre par les points suivants :
- les moules sont prédisposés côte à côte en fixation sur au moins un support horizontal,
- la chambre de vulcanisation du four est sous forme de tunnel rectiligne,
- le poste de remplissage et le poste de démoulage sont disposés de manière attenante l'un à l'autre, dans l'alignement l'un de l'autre et de manière latérale au four,
- dans l'axe du four, en regard de l'ouverture de déchargement, est prévue une zone de refroidissement des moules,
- entre le poste de remplissage et le four est prévu un premier dispositif de transfert destiné à recevoir dudit poste de remplissage l'ensemble support horizontal et moules et introduire cet ensemble dans la chambré de vulcanisation du four par passage au travers de l'ouverture de chargement,
- le four est équipé dans la chambre de vulcanisation d'un moyen de positionnement de l'ensemble support horizontal et moules qui assure le maintien dudit ensemble à écartement des parois longitudinales verticales et horizontales de ladite chambre, de façon que la vapeur lors de la vulcanisation qui intervient après fermeture des portes, puisse se répartir uniformément dans la chambre du four autour de l'ensemble cadre support et moules,
- sont prévus des moyens de centrage longitudinal de l'ensemble support horizontal et moules, dans la chambre de vulcanisation du four avant fermeture des portes,
- entre la zone de refroidissement et le poste de démoulage est prévu un second dispositif de transfert destiné à recevoir de la zone de refroidissement, l'ensemble support horizontal et moules et le transférer vers le poste de démoulage,
- les deux dispositifs de transfert et la zone de refroidissement sont constitués chacun par une structure tridimensionnelle pourvue d'au moins un chemin de guidage et de support, horizontal, rectiligne, parallèle à l'axe longitudinal de la chambre de vulcanisation du four, destiné à recevoir l'ensemble support horizontal et moules, la zone de refroidissement étant fixe et les deux dispositifs de transferts étant déplaçables en translation sur des rails de guidage par des moyens moteurs, entre une position alignée avec le poste de remplissage et une position alignée avec la chambre de vulcanisation du four pour le premier dispositif de transfert et entre une position alignée avec la zone de refroidissement et une position alignée avec le poste de démoulage pour le second dispositif de transfert,
- lesdits moyens de transferts et ladite zone de refroidissement sont équipés de moyens de propulsion de l'ensemble cadre horizontal et moule sur leurs chemins respectifs tant dans le sens de l'introduction dudit ensemble sur leur chemin que dans le sens de leur extraction.

Ainsi il est possible de fabriquer des articles en latex quasi en continu et d'utiliser un four dans lequel une pression importante de vapeur sous température élevée peut être maintenue ce qui diminue grandement le temps de vulcanisation et accroît les cadences de fabrication.

Selon une autre caractéristique de l'invention, chaque porte d'obturation de la chambre de vulcanisation du four est mobile verticalement dans des glissières fixées au four, entre une position basse d'ouverture de la chambre de vulcanisation du four et une position haute de fermeture de la chambre de vulcanisation du four, et est mobilisée entre ces deux positions par au moins un organe moteur sur le circuit de commande duquel est disposé un élément de sécurité lequel lorsqu'il est actionné, commande l'activation de l'organe moteur dans le sens de l'ouverture de la porte, cet organe de sécurité étant associé à une plaque de sécurité solidaire de la porte et montée de manière mobile en translation verticale au-dessus du bord supérieur de la porte de sorte qu'une action sur cette plaque, dirigée vers bas, conduise à actionner l'organe de sécurité et à entraîner la porte vers sa position d'ouverture.

Cette caractéristique est propice à améliorer la sécurité et conduit à l'ouverture de la porte si cette dernière au cours de son mouvement de fermeture rencontre un obstacle.

Selon une autre caractéristique de l'invention, le four autour de chacune des ouvertures de la chambre de vulcanisation est équipé d'une gorge continue dans laquelle est disposé un joint d'étanchéité, formant piston dans la rainure, ladite rainure étant connectée à une source d'air comprimé par l'intermédiaire d'une électrovanne et en position de fermeture de la porte est alimentée en air comprimé via l'électrovanne ce qui repousse le joint d'étanchéité contre la porte et assure l'étanchéité à ce niveau, ladite rainure est par ailleurs connectée via une seconde électrovanne à une source à dépression et est connectée à cette source avant ouverture de la porte de façon que sous l'effet de l'aspiration créée, le joint d'étanchéité soit ramené intégralement dans la rainure et soit dégagé de la porte.

De part cette caractéristique, tout défaut de planéité de la face interne de la porte ou de positionnement imprécis de la porte face à l'ouverture sera compensé par la déformation du joint ce qui garant d'une bonne étanchéité.

Selon encore une autre caractéristique de l'invention, le moyen de positionnement dans la chambre de vulcanisation du four de l'ensemble support horizontal et moules est constitué par au moins deux cadres verticaux formés par assemblage de longerons et traverses, disposés dans la chambre de vulcanisation du four, en vis-à-vis l'un de l'autre, parallèlement l'axe longitudinal du four, contre les faces internes verticales de ladite chambre et par au moins un chemin horizontal de guidage et de support de l'ensemble support horizontal et moules, solidaire des deux cadres et s'étendant d'une des ouvertures à l'autre, ledit chemin étant disposé intégralement dans l'intervalle entre les cadres de façon que des passages de vapeur soient ménagés entre ledit chemin et les faces latérales verticales de la chambre de vulcanisation du four.

Cette disposition permet une répartition égale de la vapeur dans le four tant en dessus qu'en dessous de l'ensemble support horizontal et n'exige pas des entrées de vapeur à différent niveaux.

Selon une autre caractéristique de l'invention, le poste de remplissage est constitué par un bac horizontal de section droite en U, ouvert en extrémité et comprenant selon son axe longitudinal, entre ses ailes verticales, un chemin de guidage horizontal et de maintien de l'ensemble support horizontal et moules, ledit chemin de guidage étant ouvert en extrémité et ledit chemin de guidage et les chemins de guidage des dispositifs de transfert de la zone de refroidissement et de la chambre de vulcanisation du four étant coplanaires.

La disposition en bac du dispositif de remplissage permet, lors du remplissage, la récupération de l'excédent de mousse tandis que la disposition de coplanérité permet le passage aisé de l'ensemble support horizontal et moules vers le premier dispositif de transfert.

Selon une autre caractéristique de l'invention, le poste de démoulage est doté de deux ailes verticales longitudinales écartées l'une de l'autre entre lesquelles est ménagé un chemin de guidage et de maintien d'un ensemble support et moules, ledit chemin de guidage étant ouvert en extrémité, ledit chemin de guidage et les chemins de guidage des dispositifs de transfert, du poste de remplissage, de la zone de refroidissement et de la chambre de vulcanisation du four étant coplanaires, ledit chemin de guidage étant disposé dans l'alignement du chemin de guidage du poste de remplissage.

Cette disposition de coplanérité facilite le transfert de l'ensemble support horizontal et moules d'un chemin de guidage à l'autre.

Selon une autre caractéristique de l'invention, la chambre de vulcanisation du four est équipée de plusieurs chemins de guidage et de maintien agencés selon plusieurs niveaux de hauteur pour recevoir simultanément plusieurs ensembles support horizontal et moules. De plus à chacun de ces niveaux de hauteur, les dispositifs de transfert et la zone de refroidissement comportent chacun un chemin de guidage et de maintien d'un ensemble support horizontal et moules et les postes de remplissage et de démoulage sont chacun mobiles en translation verticale entre les différents niveaux de hauteur sous l'action d'un moyen moteur qui leur est propre, ledit moyen moteur assurant d'autre part leur positionnement en hauteur selon le niveau de hauteur choisi.

Cette disposition accroît de manière notable les cadences de fabrication et utilise au mieux les capacité du four.

Selon une autre caractéristique de l'invention, l'unité de lavage est constituée de deux séries d'au moins deux organes presseurs, montées l'une au-dessus de l'autre, afin de définir un canal de pressage et de dilatation des produits, comportant une entrée de produits et une sortie de produits, lesdits organes presseurs étant entraînés en rotation sur eux-mêmes par un moyen moteur pour entraîner les produits dans le canal depuis l'entrée de ce dernier vers la sortie, les organes presseurs de chaque série étant disposés au droit des organes presseurs de l'autre et les organes presseurs de chaque série étant écartés l'un de l'autre de façon à ménager entre eux un intervalle dans lequel l'article moulé peut se dilater, ladite unité de lavage, étant équipée de plus, d'un moyen d'injection d'un agent liquide de lavage dans l'intervalle sus défini de façon que l'article en latex lors de son expansion ledit intervalle puisse se charger en agent liquide de lavage.

Par compressions successives des articles en latex, l'unité de lavage en plus du nettoyage en profondeur des articles réalise une stabilisation dimensionnelle de ces derniers.

Selon une autre caractéristique de l'invention, l'unité de séchage est constituée de deux séries d'au moins deux organes presseurs, montées l'une au-dessus de l'autre, afin de définir un canal de pressage et de dilatation des produits, comportant une entrée de produits et une sortie de produits, ladite entrée de produit étant en regard de la sortie des produits de l'unité de lavage, lesdits organes presseurs étant entraînés en rotation sur eux-mêmes par un moyen moteur pour entraîner les produits dans le canal, les organes presseurs de chaque série étant disposés au droit des organes presseurs de l'autre et les organes presseurs de chaque série étant écartés l'un de l'autre de façon à ménager entre eux un intervalle dans lequel de l'air chaud et sec est introduit par un moyen d'injection en sorte de sécher les produits.

L'introduction de l'air chaud dans l'intervalle dans lequel le produit se dilate permet une introduction de cet air dans la masse dudit produit et réalise un séchage à coeur. L'air chargé en humidité sera chassé de la masse du produit lors de la compression ultérieure de ce dernier.

D'autres avantages et buts et caractéristiques de l'invention apparaitront à la lecture de la description d'une forme préférée de réalisation donnée à titre d'exemple non-limitatif en se référant aux dessins annexés en lesquels :

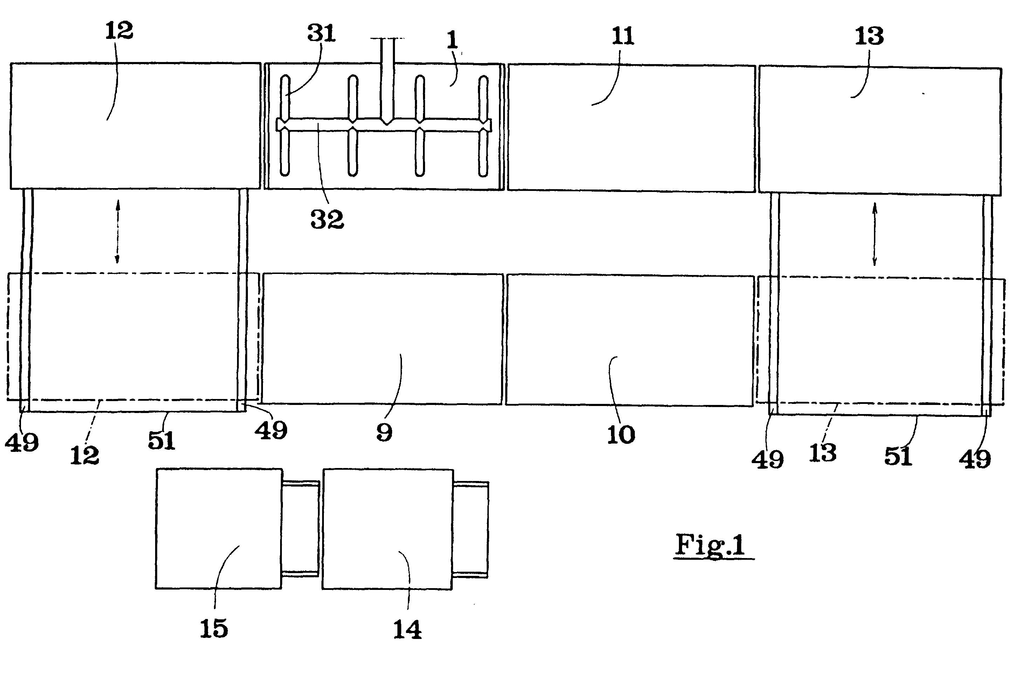

- la figure 1 est une vue de dessus d'une installation selon l'invention,

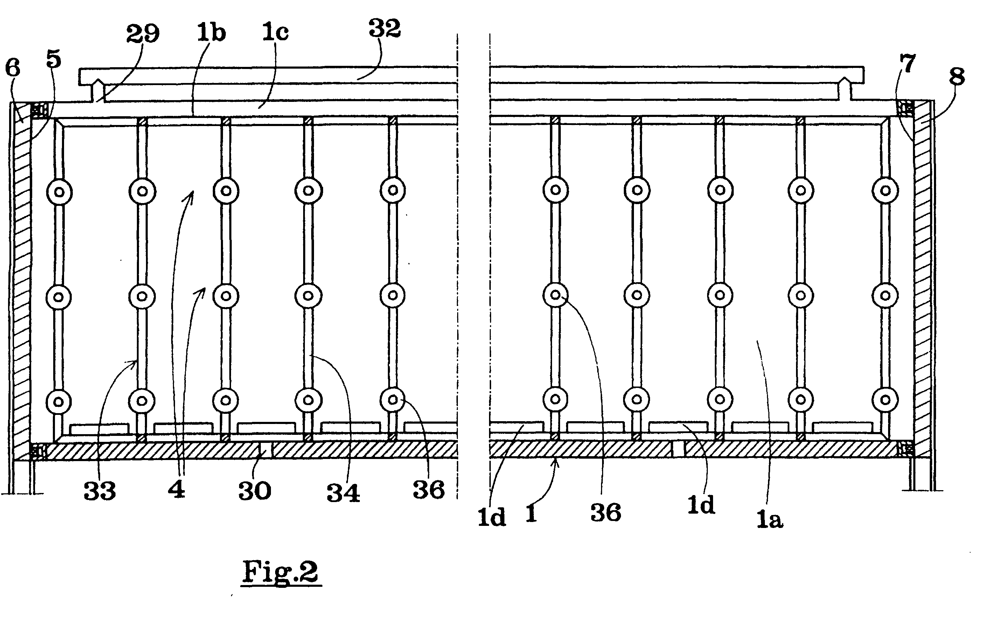

- la figure 2 est une vue en coupe longitudinale du four de l'installation selon l'invention,

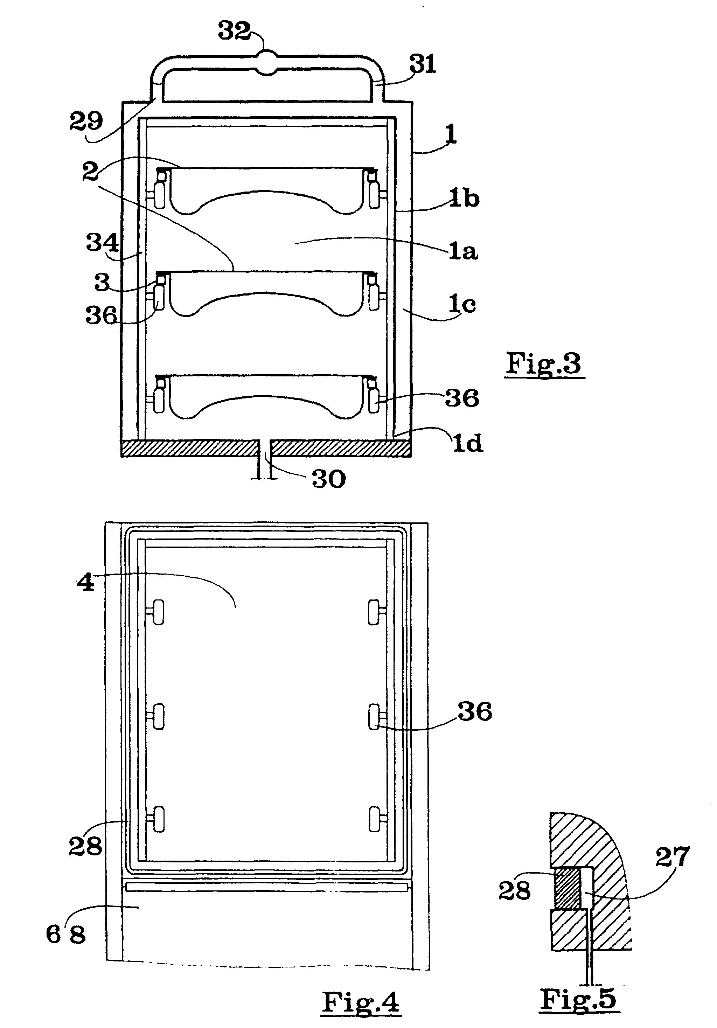

- la figure 3 est une coupe transversale du four, la figure 4 est une vue de face du four,
- la figure 5 est une vue en coupe de la gorge continue et du joint d'étanchéité équipant le four,

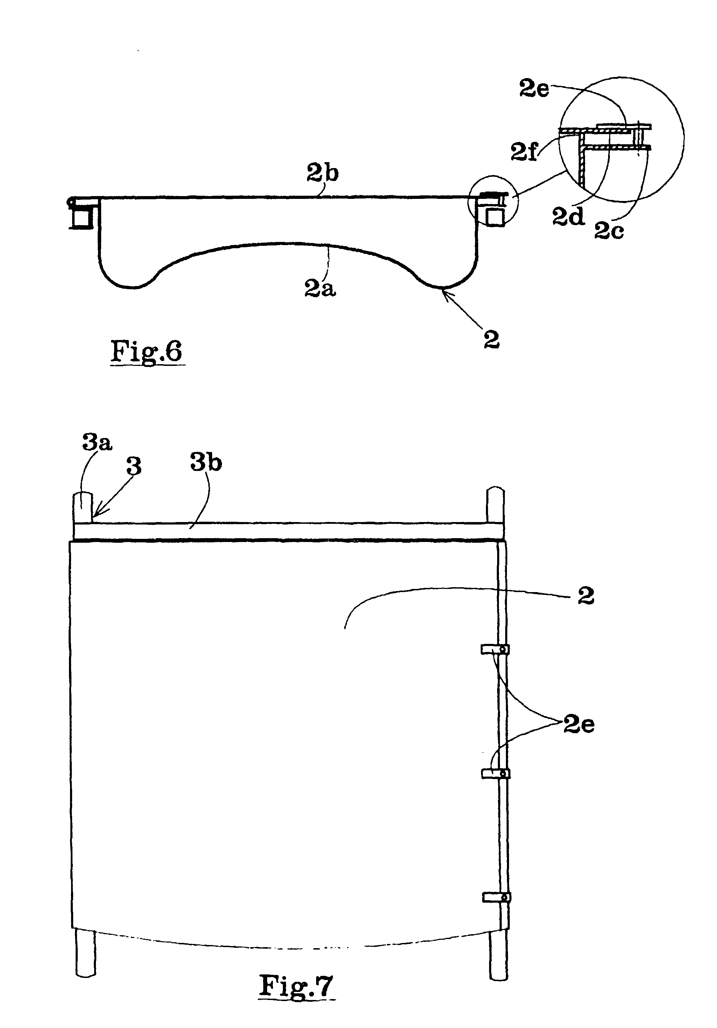

- la figure 6 est une vue en coupe du moule de l'installation selon l'invention,
- la figure 7 est une vue de dessus, partielle, d'un ensemble support horizontal et moules,

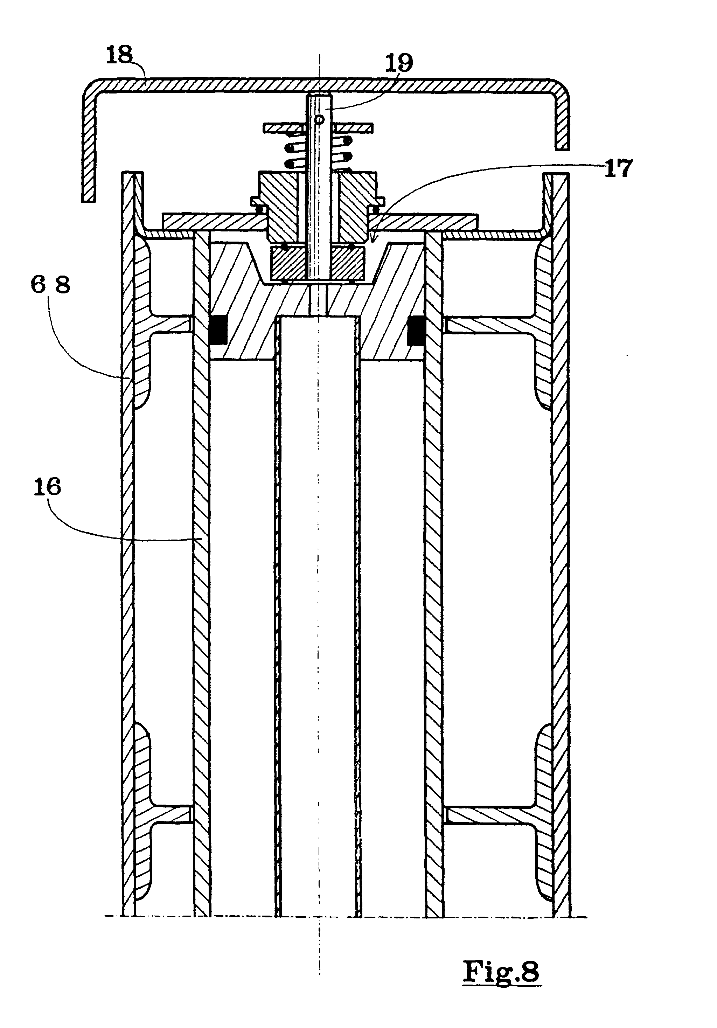

- la figure 8 est une vue en coupe longitudinale, partielle de l'une des portes du four,

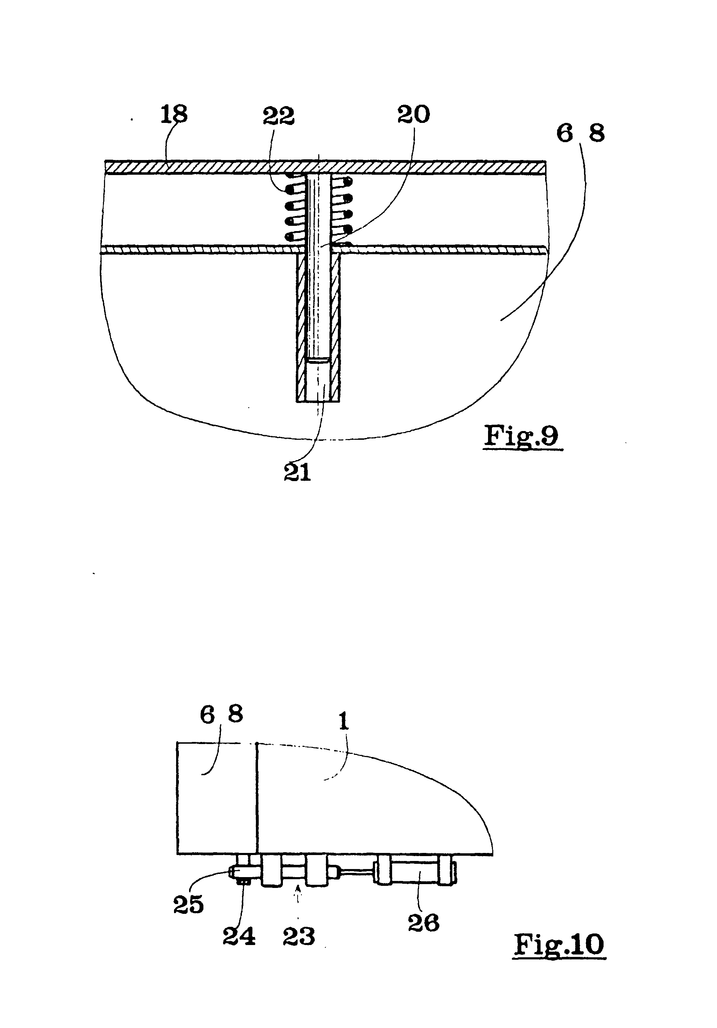

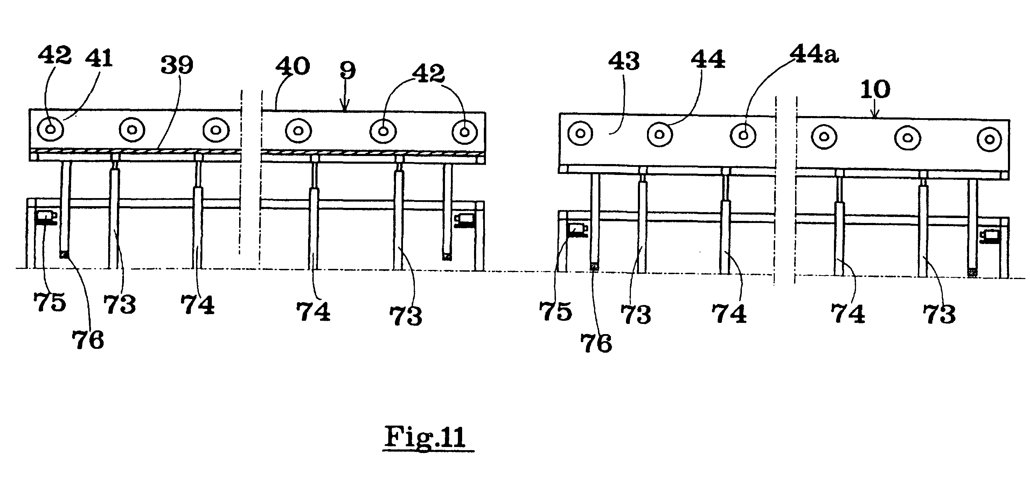

- la figure 9 est une vue en coupe partielle de la plaque de securité équipant chaque porte du four,
- la figure 10 est une vue de détail montrant les moyens de verrouillage de chaque porte du four en position de fermeture,
- la figure est une vue en coupe des postes de moulage et de démoulage de l'installation selon l'invention,

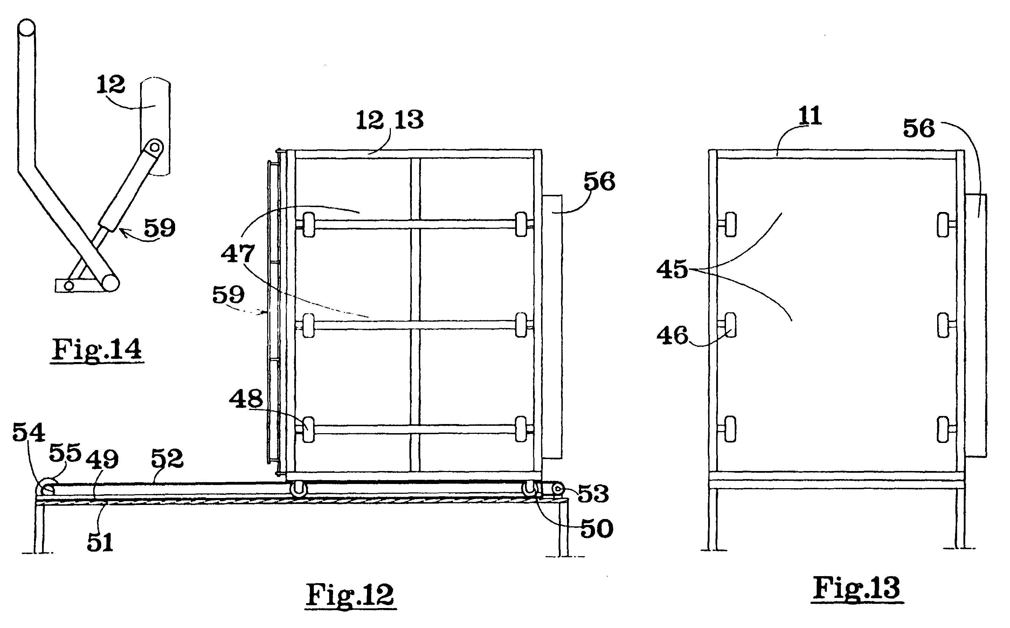

- la figure 12 est une vue en coupe transversale d'un dispositif de transfert,
- la figure 13 est une vue en coupe transversale de la zone de refroidissement,
- la figure 14 est une vue de détail montrant l'ensemble de poussée équipant le premier dispositif de transfert, en position inactive,

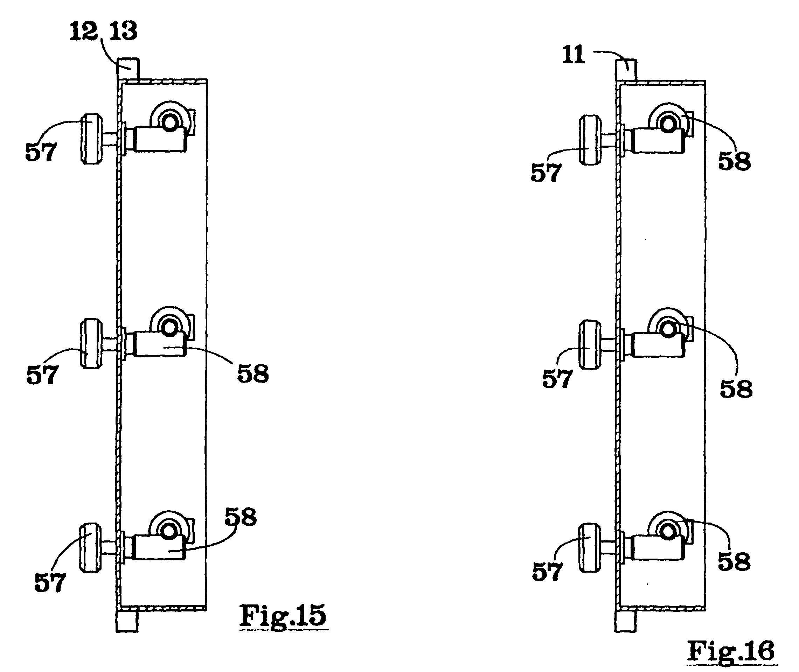

- les figures 15 et 16 montrent les moyens de propulsion équipant les dispositifs de transfert et la zone de refroidissement,

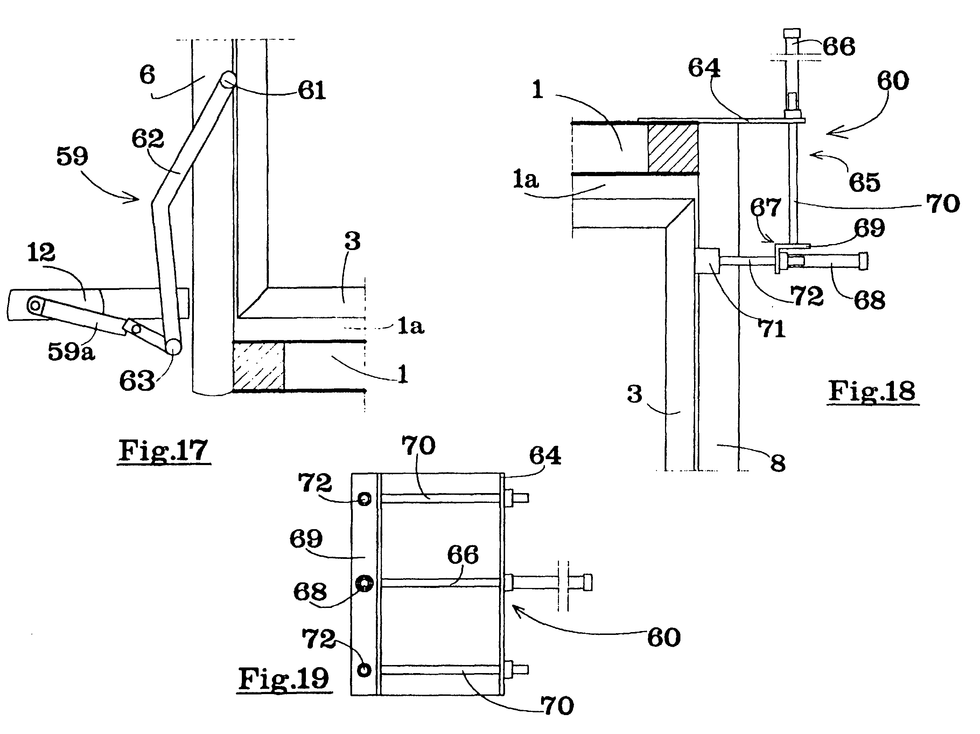

- la figure 17 est une vue de dessus, de détail montrant l'ensemble de poussée équipant le premier dispositif de transfert, en position active,
- la figure 18 est une vue de dessus, de détail montrant l'ensemble de butée équipant le four,
- la figure 19, est une vue de face, montrant l'ensemble de butée équipant le four,

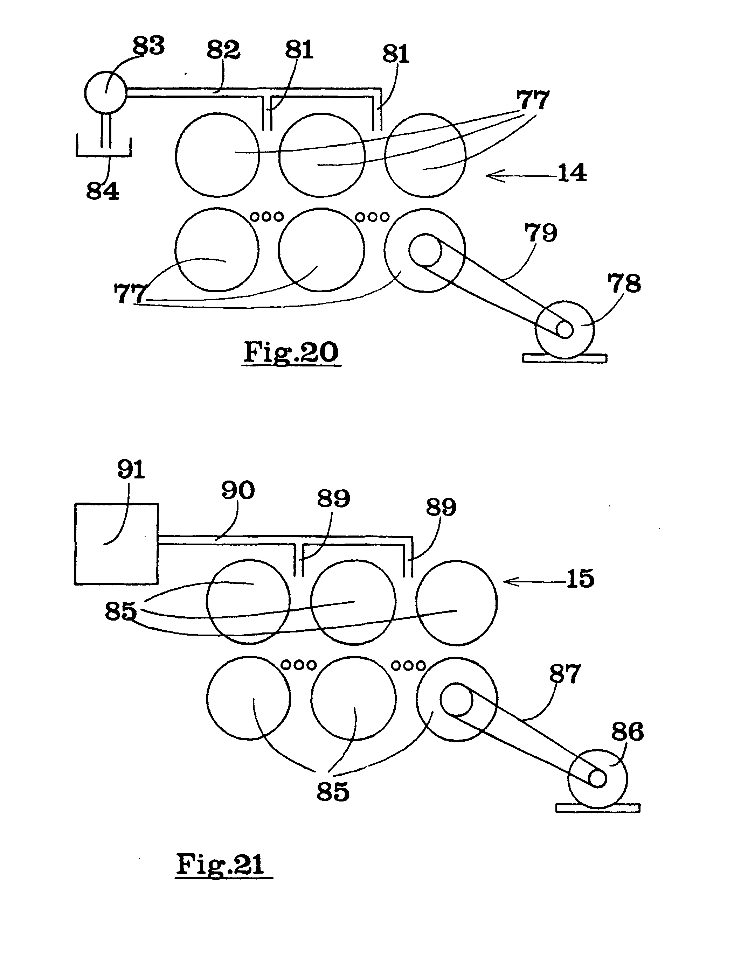

- les figures 20 et 21 sont respectivement des vues schématiques de l'unité de lavage et de l'unité de séchage.

Telle que représentée l'installation de fabrication d'articles moulés en mousse de latex comprend un four 1 du type autoclave, dans la chambre de vulcanisation duquel de la vapeur sous température et pression relativement élevées est introduite pour vulcaniser la mousse de latex disposées dans des moules 2 portés par un support horizontal 3 amovible reposant dans la chambre de vulcanisation du four 1 sur un chemin 4 de guidage horizontal et de maintien, s'étendant entre une ouverture d'introduction 5 obturable par une première porte mobile 6 et une ouverture de déchargement / opposée à la précédente, obturable par seconde porte mobile 8 lesdites ouvertures de chargement 5 et de déchargement 7 étant perpendiculaires à l'axe longitudinal de la chambre de vulcanisation du tour. L'installation, de manière latérale au four 1, comprend de plus un poste de remplissage 9 des moules 2 en mousse de latex. Dans le prolongement du poste de remplissage 9 est disposé un poste de démoulage 10 des articles de leurs moules 2, ces deux postes 9, 10 étant axialement alignés et se développent parallèlement à l'axe longitudinal du four 1. Dans l'alignement du four 1, en regard de l'ouverture de déchargement 7, l'installation est équipée d'une zone de refroidissement 11. Cette zone de refroidissement 11 est latérale au poste de démoulage 10. L'installation entre le poste de remplissage 9 et le four 1 comporte un premier dispositif de transfert 12 destiné à recevoir dudit poste de remplissage 9 l'ensemble support horizontal 3 et moules 2 et introduire cet ensemble dans de la chambre de vulcanisation du four 1 par passage au travers de l'ouverture de chargement 5. Entre la zone de refroidissement 11 et le poste de démoulage 5, l'installation est pourvue d'un second dispositif de transfert 13 destiné à recevoir de la zone de refroidissement 11, l'ensemble support horizontal 3 et moules 2 et le transférer vers le poste de démoulage 10. Le cheminement de l'ensemble support 3 et moules 2 dans l'installation est le suivant. Après remplissage des moules 2 en mousse de latex au niveau du poste de remplissage, l'ensemble support 3 et moules 2 est introduit dans le premier dispositif de transfert 12 préalablement positionné dans l'alignement du poste de remplissage 9. Par la suite, le dispositif de transfert 12 est amené dans l'axe de la chambre de vulcanisation la du four 1, en regard de l'ouverture d'introduction 5 et après ouverture de la porte 6, l'ensemble support 3 et moules 2 est introduit dans ladite chambre de façon que la mousse en latex y subisse une vulcanisation. Après cuisson des articles, la porte 8 associée à l'ouverture de déchargement 7, est ouverte et l'ensemble support horizontal 3 et moules 2 est introduit dans la zone de refroidissement 11 dans laquelle il y demeure quelques minutes. Par la suite, l'ensemble support horizontal 3 et moules 2 est introduit dans le second dispositif de transfert 13, préalablement positionné dans l'axe de la zone de refroidissement 11. Ce second dispositif de transfert 13 est ensuite amené dans l'axe du poste de démoulage 10 et l'ensemble support horizontal 3 et moules 2 est introduit dans ledit poste. Après démoulage, les articles sont introduits dans une unité de lavage 14 et enfin dans une unité de séchage 15 et l'ensemble support horizontal 3 et moules 2 est introduit dans le poste de remplissage 9 pour que lesdits moules 2 soient remplis à nouveau en mousse de latex. Plusieurs ensembles support horizontal et moules sont utilisés et sont disposés dans l'installation les uns à la suite des autres de façon que des opérations de démoulage, de remplissage, de vulcanisation et de refroidissement se déroulent simultanément.

La chambre de vulcanisation la de forme parallélépipédique s'étend de manière rectiligne entre les ouvertures de chargement 5 et déchargement 7. Ces ouvertures 5 et 7 sont perpendiculaires à l'axe longitudinal de la chambre 1a. La chambre de vulcanisation la est délimitée dans le four par une enveloppe 1b montée sur la paroi inférieure du four et écartée des parois supérieure et latérales du four. Cette enveloppe délimite avec le four une enceinte 1c entourant selon trois faces, la chambre de vulcanisation. L'enceinte 1c en extrémité, préférentiellement au droit des ouvertures 5 et 7, est obturée par deux parois fixées d'une part aux parois du four et d'autre part à l'enveloppe 1b.

Selon la forme préférée de réalisation, chaque porte 6, 8 d'obturation des ouvertures 5 et 7 de la chambre de vulcanisation 1a du four 1 est mobile verticalement entre une position basse d'ouverture de la chambre de vulcanisation du four et une position haute de fermeture du four dans des glissières verticales de section droite en U, disposées de part et d'autre de l'ouverture correspondante. Ces glissières sont positionnées l'une par rapport à l'autre en sorte que leur intrados soit tournés l'un vers l'autre. La porte, selon ses rives latérales verticales, est pourvue de patins de glissement assujettis à venir glisser contre le fond de la glissière.
La porte 6, 8 est mobilisée entre la position d'ouverture et la position de fermeture par au moins un organe moteur 16 sur le circuit de commande duquel est disposé un élément de sécurité 17 lequel lorsqu'il est actionné, commande l'activation de l'organe moteur 16 dans le sens de l'ouverture de la porte 6, 8. De préférence, cet élément de sécurité 17 est associé à une plaque de sécurité 18, d'actionnement, solidaire de la porte et montée de manière mobile en translation verticale au-dessus du bord supérieur de cette dernière de sorte qu'une action sur cette plaque dirigée vers bas, par exemple lors du mouvement de fermeture de la porte conduise à actionner l'organe de sécurité et à inverser le sens du mouvement de la porte ce qui la ramène en position d'ouverture.

De préférence, l'organe moteur 16 est constitué par un vérin pneumatique solidaire par sa tige de la structure du four et par son corps de la porte du four, ledit vérin, par son corps étant introduit dans un logement vertical pratiqué dans la porte comprenant une ouverture inférieure dans la rive inférieure de la porte pour le passage du corps du vérin et une ouverture superieure dans la rive supérieure de la porte au niveau de laquelle est positionné l'élément de sécurité 17 lequel est constitué par une soupape avec tige d'actionnement 19, connectée à la chambre arrière du vérin. Cette soupape lorsqu'elle est actionnée, c'est-à-dire lorsque sa tige d'actionnement 19 est enfoncée dans le corps et l'obturateur dégagé du siège, place ladite chambre arrière à la décharge. Dans la forme de réalisation choisie, la soupape est vissée dans un taraudage traversant, pratiqué dans la paroi terminale de la chambre arrière du vérin. La tige 19 d'actionnement de la soupape est positionnée sous la plaque de sécurité 18 en sorte d'être actionnée par cette dernière. La plaque de sécurité 18 est montée au-dessus de la rive supérieure de la porte 6, 8 et comprend en fixation sur sa face inférieure deux tiges de guidage verticales 20 destinées à venir coopérer en guidage avec deux alésages 21 pratiqués dans la porte depuis la rive supérieure de cette dernière. Autour de chaque tige de guidage sera monté un ressort de rappel 22 à spires. De préférence, la plaque de sécurité 18 sera équipée de deux ailes latérales verticales s'étendant vers le bas pour masquer la partie supérieure de la porte 6, 8.

Chaque porte est associée à au moins un mécanisme de verrouillage 23 qui assure le verrouillage de sa position fermée. Ce mécanisme est constitué d'une part d'une patte verticale avec perçage 24 solidaire de la porte et d'autre part d'une clavette cylindrique 25 solidaire de la structure du four actionnée par un organe moteur 26 entre une position d'effacement selon laquelle elle est écartée de la patte 24 et une position de verrouillage selon laquelle elle est engagée dans le perçage de la patte 24. La clavette 24 est montée en coulissement dans deux guides support écartés l'un de l'autre et fixés au four. De préférence l'organe moteur 26 est constitué par un vérin pneumatique. Ce vérin est fixé par son corps à la structure du four. La clavette 25 est fixée à la tige de ce vérin.

Afin d'assurer l'étanchéité de la chambre de vulcanisation après fermeture des portes 6, 8, le four autour de chacune des ouvertures de la chambre de vulcanisation, dans les parois d'extrémité d'obturation de l'enceinte 1c est équipé d'une gorge continue 27 dans laquelle est disposée un joint d'étanchéité 28. Ce joint forme piston dans la rainure 27 et cette dernière est connectée à une source d'air comprimé, non représentée, par l'intermédiaire d'une électrovanne, non représentée et en position de fermeture de la porte est alimentée en air comprimé via l'électrovanne ce qui repousse le joint d'étanchéité contre la porte et assure l'étanchéité à ce niveau.

La rainure sera connectée via une seconde électrovanne, non représentée, à une source à dépression, non représentée, et sera connectée à cette source avant ouverture de la porte 6, 8 de façon que sous l'effet de l'aspiration créée, le joint d'étanchéité 28 soit ramené intégralement dans la rainure 27 et soit dégagé de la porte.

La chambre de vulcanisation 1a du four comporte plusieurs entrées de vapeur 29 ménagées dans la paroi supérieure du four 1 et venant en communication avec l'enceinte 1c et plusieurs sorties 30 de vapeur et d'eau condensée, pratiquées dans la paroi inférieure du four, l'enceinte 1c étant en communication avec la chambre la par des passages 1d pratiqués dans la partie inférieure de l'enveloppe 1c. Les entrées de vapeur 29 sont disposées à intervalle régulier et sont constituées par des perçages traversants pratiqués dans la paroi supérieure à intervalle régulier les uns des autres et selon le sens de la longueur de ladite paroi. Ces perçages traversants pourront recevoir un chemisage et sont chacun en relation de communication avec une conduite secondaire 31 d'amenée de vapeur, connectée à une conduite principale 32 d'amenée de vapeur, elle-même connectée à un générateur de vapeur, non représenté, connu en soi qui délivre de la vapeur sous température et pression relativement élevées et contrôlées par des moyens appropriés connu en soi, par l'intermédiaire desquels il est possible d'ajuster aussi bien la valeur de la pression de la vapeur que la valeur de la température.

Le four 1, dans la chambre de vulcanisation la, est équipé d'un moyen de positionnement 33 de l'ensemble support horizontal 3 et moules 2 qui assure le maintien dudit ensemble à écartement des parois longitudinales verticales et horizontales de ladite chambre. De cette façon, la vapeur peut se répartir uniformément dans la chambre du four autour de l'ensemble support horizontal et moules 2 ce qui est garant d'une vulcanisation uniforme des articles.

De préférence le moyen de positionnement 33 est constitué par au moins deux cadres verticaux 34 formés par assemblage de longerons et traverses, disposés dans la chambre de vulcanisation du four en vis-à-vis l'un de l'autre, parallèlement l'axe longitudinal dudit four, contre les faces internes verticales de ladite chambre c'est-à-dire contre les faces internes latérales de l'enveloppe 1b et par au moins un chemin horizontal de guidage et de support 4 de l'ensemble support horizontal 3 et moules 2, solidaire des deux cadres 34 et s'étendant d'une des deux ouvertures 5, 7 à l'autre. Ce chemin 4 est formé intégralement dans l'intervalle entre les cadres 34 afin de ménager un passage de vapeur entre ledit chemin et les faces latérales verticales de la chambre de vulcanisation du four. Les cadres 34 sont maintenus à écartement l'un de l'autre par des entretoises fixées à leurs longerons supérieurs.
Le chemin de guidage et de support 4 est constitué par deux séries de galets 36, de même diamètre, disposées en vis-à-vis l'une de l'autre à écartement l'une de l'autre, lesdits galets 36 étant montés fous, en porte-à-faux, sur des axes horizontaux perpendiculaires à l'axe longitudinal du chemin de guidage, lesdits axes étant fixés par leur extrémité proximale aux traverses des cadres du moyen de positionnement et étant disposés selon un même plan géométrique horizontal.

Les moules sont prédisposés côte à côte en fixation sur le support horizontal. Chaque moule 2 est constitué par un élément inférieur de moule 2a, formant un creux et un élément supérieur de moule 2b destiné à venir recouvrir l'élément inférieur et former avec ce dernier une cavité de moulage dans laquelle, par passage au travers d'un perçage de remplissage ménagé dans la paroi de l'élément supérieur, est introduite, au niveau du poste de moulage, de la mousse de latex. Avantageusement le perçage de remplissage est doté d'un clapet anti-retour destiné à éviter le refoulement de la mousse hors du moule. L'élément supérieur sera doté de perçages traversants constituant évents.

Les deux éléments de moule comportent une embase périphérique 2c, 2d. L'embase périphérique de l'élément inférieur est plus large que l'embase périphérique de l'élément supérieur, le moule prenant appui par l'embase de l'élément inférieur sur le support horizontal. Dans la forme de réalisation choisie, l'élément supérieur et l'élément inférieur sont articulés l'un à l'autre par des charnières. Par ailleurs le moule 2 est pourvu d'organes de verrouillage 2e des deux éléments 2a, 2b en position de rabattement l'un sur l'autre de façon à éviter, lors de la vulcanisation, l'écartement des éléments l'un par rapport à l'autre sous l'effet de l'expansion de la mousse de latex. Ces organes de verrouillage sont disposés sur l'embase périphérique de l'élément inférieur, à l'opposé des charnières. Avantageusement chaque organe de verrouillage est constitué par un loquet, monté en articulation sur l'embase périphérique de l'élément inférieur et venant en position de verrouillage s'engager sur l'embase de l'élément supérieur.

Selon une forme préférée de réalisation, l'élément inférieur de moulage 2a, en saillie par rapport à son embase périphérique, est doté d'une paroi sans fin 2f, de faible épaisseur formant la partie supérieure de la cavité de moulage. Le bord supérieur de cette paroi sans fin 2f est disposé selon le plan de joint. Contre ce bord supérieur est rabattu l'élément supérieur 2b pour la fermeture du moule 2. Lors de l'introduction de la mousse de latex dans le moule et lors de la vulcanisation, il arrive parfois que de faibles quantité de mousse soit expulsée vers l'extérieur par passage au travers des interstices entre la paroi continue 2f et l'élément supérieur 2b. Un tel inconvénient crée par la suite des bavures qu'il convient d'éliminer. Habituellement ces bavures sont retirées après démoulage du produit et l'opération d'ébavurage dans ce cas requiert l'emploi d'une personne supplémentaire ce qui accroît le prix de revient. De plus l'opération d'ébavurage est souvent réalisée à l'aide de ciseaux ou autres instruments tranchants ce qui n'est pas de nature à donner au produit un aspect fini. Grâce à la présence de la paroi sans fin 2f qui présente une faible épaisseur et peut de ce fait constituer un élément apte à trancher les bavures, l'opération d'ébavurage du produit peut maintenant s'effectuer avant que le produit ne soit retiré du moule en exerçant simplement sur la bavure un effort de cisaillement.

Le support horizontal 3 est constitué par un cadre formé de deux longerons 3a joints par une pluralité de traverses 3b délimitant successivement avec les longerons, des cellules dans lesquelles sont disposés les moules 2, lesquels reposent par deux cotés opposés de l'embase périphérique de l'élément inférieur 2a sur les deux longerons du support. L'élément inférieur de moule pourra être pourvu d'au moins un élément en forme de fourche destiné à être disposé autour d'un des longerons afin d'assurer le positionnement dudit moule par rapport au dit support.

Le poste de remplissage 9 est monté sur une structure porteuse et est constitué par un bac horizontal 39 de section droite en U, ouvert en extrémité et comprenant selon son axe longitudinal, entre ses ailes verticales 40, un chemin de guidage horizontal et de maintien 41 de l'ensemble support horizontal 3 et moules 2, ce chemin de guidage étant ouvert en extrémité.

Le chemin de guidage 41 est constitué par deux séries de galets 42 de même diamètre, disposées en vis-à-vis l'une de l'autre en écartement l'une de l'autre, dont une est portée par l'une des ailes verticales 40 du bac et l'autre série par l'autre aile, chaque galet 42 de chaque série étant monté fou, en porte-à-faux, sur un axe horizontal perpendiculaire à l'axe longitudinal du chemin de guidage 41, ledit axe étant fixé par son extrémité proximale à l'aile correspondante.

Le poste de démoulage 10 est monté sur une structure porteuse et comprend deux ailes verticales longitudinales 43, écartées l'une de l'autre entre lesquelles est ménagé un chemin de guidage 44 et de maintien d'un ensemble support et moules, ouvert en extrémité, ledit chemin de guidage et le chemin de guidage 41 du poste de remplissage 9 étant coplanaires et disposés dans l'alignement l'un de l'autre.

Le chemin de guidage 44 est constitué par deux séries de galets 44a de même diamètre disposées en vis-à-vis l'une de l'autre en écartement l'une de l'autre, dont une est portée par l'une des ailes verticales du poste de démoulage 43 et l'autre série par l'autre aile, chaque galet 45 de chaque série étant monté fou, en porte-à-faux, sur un axe horizontal perpendiculaire à l'axe longitudinal du chemin de guidage. Cet axe est fixé par son extrémité proximale à l'aile 43 correspondante.

Pour faciliter l'ouverture des moules au niveau du poste de démoulage, l'élément supérieur de chaque moule est doté d'un moyen de préhension tel un crochet et au niveau de poste de démoulage est prévu un palan monté sur un bras de traction articulé sur une structure et associé à un moyen moteur d'actionnement pivotement. Le palan comporte une pluralité de crochets auxquels sont fixés les organes de préhension des moules. Après accrochage au palan des organes de préhension et pivotement vers l'arrière du bras de traction, est obtenue l'ouverture des moules.

La zone de refroidissement 11, installée fixement en regard de l'ouverture de déchargement 7 de la chambre de vulcanisation 1a du four 1, est constituée par une structure tridimensionnelle délimitant un volume parallélépipédique. Cette structure est formée par assemblage de longerons horizontaux paralleles a l'axe du four, de traverses horizontales perpendiculaires aux longerons et de montants verticaux régulièrement espacés, auxquels est fixé dans le volume parallélépipédique formé, au moins un chemin de guidage et de support 45, horizontal, rectiligne, disposé dans l'alignement de l'axe longitudinal de la chambre de vulcanisation, ouvert aux deux extrémités et destiné à recevoir de la chambre de vulcanisation, un ensemble support horizontal 3 et moules 2. Le chemin de guidage 45 de la zone de refroidissement 11 est constitué par deux séries de galets 46 de mêmes diamètres, disposées en vis-à-vis l'une de l'autre, en écartement l'une de l'autre, lesdits galets étant montés fous, en porte-à-faux, sur des axes horizontaux, perpendiculaires à l'axe longitudinal du chemin de guidage, lesdits axes étant fixés par leur extrémité proximale à la structure de la zone de refroidissement et plus précisément aux montants et étant disposés selon un même plan géométrique horizontal.

Les deux dispositifs de transfert 12, 13 sont constitués chacun par une structure tridimensionnelle, délimitant un volume parallélépipédique. Cette structure est formée par assemblage de longerons horizontaux parallèles à l'axe longitudinal de la chambre de vulcanisation du four, de traverses horizontales perpendiculaires aux longerons et de montants verticaux régulièrement répartis, auxquels est fixé, dans le volume parallélépipédique formé, au moins un chemin de guidage et de support 47 horizontal, rectiligne, parallèle à l'axe longitudinal de la chambre de vulcanisation du four. Le chemin de guidage 47 de chaque dispositif de transfert 12, 13, est constitué par deux séries de galets 48 de même diamètre, disposées en vis-à-vis l'une de l'autre en écartement l'une de l'autre, lesdits galets 48 étant montés fous, en porte-à-faux, sur des axes horizontaux perpendiculaires à l'axe longitudinal du chemin de guidage, lesdits axes étant fixés par leur extrémité proximale à la structure du dispositif de transfert et étant disposés selon un même plan géométrique horizontal. Chaque dispositif de transfert 12, 13 est déplaçable en translation sur des rails de guidage 49 par des moyens moteurs, entre une position alignée avec le poste de remplissage 9 et une position alignée avec la chambre de vulcanisation du four 1 pour le premier dispositif de transfert 12 et entre une position alignée avec la zone de refroidissement 11 et une position alignée avec le poste de démoulage 10 pour le second dispositif de transfert. De préférence chaque dispositif de transfert 12, 13 est porté par des organes de roulement 50 engagés dans les rails de guidage 49. Ces rails de guidage sont portés par une table 51 et sont constitués chacun par un profilé de section droite en U. Ces rails de guidage 49 sont perpendiculaires à l'axe longitudinal du chemin de guidage 47 de chaque dispositif de transfert.

Les moyens moteurs assurant le déplacement en translation de chaque dispositif de transfert comprennent une courroie crantée 52 tendue entre une poulie crantée menée 53 montée dans une chape solidaire de la table 51 et une poulie crantée menante 54 accouplée à l'arbre de sortie d'un moteur électrique 54 monté en fixation sur la table 51. Le dispositif de transfert par sa structure est fixé par tout moyen connu au brin supérieur de la courroie crantée.

La zone de refroidissement 11 et chaque dispositif de transfert 12 et 13 sont chacun dotés d'un moyen de propulsion 56 de l'ensemble support horizontal 3 et moules 2 sur le chemin de guidage aussi bien dans le sens de l'introduction que dans le sens de l'extraction. Le moyen de propulsion 56 de la zone de refroidissement est disposé au niveau de l'extrémité du chemin de guidage correspondant à l'ouverture 7 de la chambre de vulcanisation la. Le moyen de propulsion 56 du premier dispositif de transfert 12 est situé au niveau de l'extrémité proximale du chemin de guidage 47, l'extrémité proximale de ce chemin étant définie comme celle venant en regard de l'ouverture de chargement 5 de la chambre de vulcanisation et en regard du poste de remplissage 9. Le moyen de propulsion 56 du second dispositif de transfert 13 est situé au niveau de l'extrémité proximale du chemin de guidage 47 de ce dispositif, l'extrémité proximale de ce chemin étant définie comme celle venant en regard de la zone de refroidissement 11 et en regard du poste de démoulage 10.

Chaque moyen de propulsion 56 est constitué par au moins un galet 57 tangent au chemin de guidage, accouplé à l'arbre de sortie d'un organe moteur 58, tel un moteur électrique, fixé à un châssis, sous forme de carter, solidaire de la structure du dispositif de transfert ou de la zone de refroidissement, ledit galet 57 par son axe de rotation étant perpendiculaire au chemin de guidage correspondant et venant en pression contre un des longerons de l'élément support en sorte que par rotation autour de son axe, il imprime à l'élément support un mouvement de translation sur le chemin de guidage.

Les moyens de centrage longitudinal de l'ensemble support horizontal et moules, dans la chambre de vulcanisation la du four 1 avant fermeture des portes 6, 8, comprend un ensemble de poussée 59, solidaire de l'extrémité avant du premier dispositif de transfert 12 et un ensemble de butée 60, solidaire du four et disposé de manière attenante à l'ouverture de déchargement, lesdits éléments de poussée 59 et de butée 60 étant actionnés chacun par au moins un moyen moteur entre une position d'effacement selon laquelle ils sont dégagés de la trajectoire de l'ensemble support horizontal et moules et une position active selon laquelle ils sont sécants à ladite trajectoire et disposés dans la chambre de vulcanisation du four à écartement des ouvertures 5, 7 de façon à dégager l'ensemble support 3 et moules 2 de la trajectoire des portes 6 et 8, ledit élément de poussée 59 étant activé après que l'ensemble support horizontal et moules ait quitté les rails du dispositif de transfert afin de venir agir en poussée sur l'extrémité arrière du support horizontal et amener l'extrémité avant dudit support en butée contre l'élément de butée préalablement disposé selon sa position active.

L'ensemble de poussée 59 est constitué par une barre verticale 61 montée en extrémité d'une structure de bras 62 fixée à un arbre vertical 63 monté libre en rotation et fixe en translation dans des paliers de la structure du premier moyen de transfert ledit arbre 63 étant accouplé au moyen moteur 59a de l'ensemble de poussée, constitué par exemple par un vérin pneumatique articulé par son corps à la structure du dispositif de transfert et par sa tige en extrémité d'une patte radiale fixée à l'arbre vertical 63. Le vérin pneumatique est connecté par l'intermédiaire d'une électrovanne à une source d'air comprimé. Par déploiement de la tige du vérin sous l'effet de la poussée de l'air comprime introduit dans la chambre arrière du vérin, est provoqué le mouvement de pivotement de l'ensemble de poussée dans le sens d'une poussée dirigée vers la chambre de vulcanisation.

L'ensemble de butée 60 comprend une platine verticale 64, de support, solidaire d'un des flans latéraux verticaux du four et parallèle aux dits flancs portant un premier élément de butée 65 mobile sous l'action d'un premier organe moteur 66 parallèlement à l'ouverture de déchargement 7 de la chambre de vulcanisation du four, entre une position d'effacement selon laquelle il est disposé en retrait latéral par rapport à la trajectoire de l'ensemble support horizontal 3 et moules 2 et une position d'activation selon laquelle il est secant à ladite trajectoire, ledit premier élément de butée supportant un second élément de butée 67 mobile en translation, sous l'action d'un second organe moteur 68, de manière perpendiculaire à l'ouverture de la chambre de vulcanisation du four, entre une position de retrait selon laquelle il est en dehors de la chambre de vulcanisation et en avant de l'ouverture de déchargement et une position d'activation selon laquelle il est dans la chambre de vulcanisation du four en arrière de l'ouverture.

Selon la forme préférée de réalisation, le premier élément de butée 65 comprend une platine verticale 69 pourvue de deux ailes dont la première est perpendiculaire au plan de l'ouverture de déchargement et la seconde parallèle à ladite ouverture et porte le second élément de butée 67, deux glissières de guidage horizontales 70, parallèles à l'ouverture de déchargement 7, disposées l'une au-dessus de l'autre, fixées chacune par une de leurs extrémités à la première aile de la platine 69 et engagées en coulissement dans deux paliers de guidage en translation fixés à la platine 64, un vérin pneumatique constituant le premier organe moteur 66, ledit vérin s'étendant horizontalement entre la platine support 64 et la première aile de la platine 69 et étant fixé par son corps à la platine support 64 et par sa tige à la première aile de la platine 69. Toujours selon la forme préférée de réalisation, le second élément de butée 67 comprend une barre de butée verticale 71, deux glissières de guidage horizontales 72, perpendiculaires à l'ouverture de déchargement 7, disposées l'une au-dessus de l'autre, fixées chacune par une de leurs extrémités à la barre de butée 71 et engagées en coulissement dans deux paliers de guidage en translation fixés à la seconde aile de la platine 69 du premier élément 65, un vérin pneumatique constituant le second organe moteur 68, ledit vérin s'étendant horizontalement entre la barre de butée 71 et la seconde aile de la platine 69 du premier élément 65 et étant fixé par son corps à ladite seconde aile et par sa tige à la barre de butée.

Selon la forme préférée de réalisation, la chambre de vulcanisation 1a du four 1 est équipée de plusieurs chemins de guidage et de maintien 4 agencés selon plusieurs niveaux de hauteur pour recevoir simultanément plusieurs ensembles support horizontal 3 et moules 2, et à chacun de ces niveaux de hauteur, la zone de refroidissement 11 et les dispositifs de transfert 12, 13, comportent chacun un chemin de guidage et de maintien d'un ensemble support horizontal et moules. Selon cette forme d'exécution, les postes de remplissage 9 et de démoulage 10 sont chacun mobiles en translation verticale entre les différents niveaux de hauteur sous l'action d'un moyen moteur qui leur est propre, ledit moyen moteur assurant d'autre part leur positionnement en hauteur selon le niveau de hauteur choisi.
Dans la forme d'exécution choisie, les rails de guidage sont disposés selon trois niveaux de hauteur. Toujours selon la forme préférée de réalisation les postes de remplissage 9 et de démoulage 10 sont montés sur une structure porteuse tridimensionnelle et sont solidaires de colonnes verticales de guidage 73 montées dans des paliers de guidage en translation, fixés à la structure porteuse. Le moyen d'actionnement en translation est constitué par un vérin pneumatique 74 fixé par son corps à la structure porteuse et par sa tige au poste 9, 10 correspondant. Le niveau inférieur de hauteur correspond à l'appui du poste 9, 10 contre la structure porteuse tandis que le niveau de hauteur supérieur correspond à la course maximale de la tige du vérin une foi déployée.
Pour maintenir le poste 9 ou 10 en position intermédiaire il est prévu un mécanisme de butée rétractable 75 venant se disposer en position déployée sur la trajectoire d'une pièce d'arrêt 76 solidaire du poste 9, 10. Dans la forme d'exécution choisie, le mécanisme de butée est constitué par un vérin pneumatique et la pièce d'arrêt est constituée par une traverse horizontale portée par deux bras verticaux fixés au poste 9, 10, la tige du vérin étant disposée en position déployée sur la trajectoire de la traverse 76 ce qui assure en combinaison avec l'alimentation de la chambre arrière du vérin 74 le maintien du poste 9, 10 en position intermédiaire.

L'unité de lavage 14 est constituée de deux séries d'au moins deux organes presseurs 77, montées l'une au-dessus de l'autre, afin de définir un canal de pressage des produits et de dilatation, comportant une entrée de produits et une sortie de produits, lesdits organes presseurs 77 étant entraînés en rotation sur eux-mêmes par un moyen moteur pour entraîner les produits dans le canal depuis l'entrée de ce dernier vers la sortie. Les organes presseurs 77 de chaque série sont disposés au droit des organes presseurs de l'autre série et les organes presseurs de chaque série sont écartés l'un de l'autre de façon à ménager entre eux un intervalle dans lequel l'article moulé peut se dilater après avoir été comprimé. L'unité de lavage est équipée de plus, d'un moyen d'injection d'un agent liquide de lavage dans l'intervalle sus défini de façon que l'article en latex lors de son expansion ledit intervalle puisse se charger en agent liquide de lavage. Lors de la compression ultérieure l'agent de lavage sera exprimé de la masse du produit, la mousse de latex utilisée conduisant à la formation d'un produit spongieux. La succession de compressions et de dilations permet la stabilisation dimensionnelle des produits en latex et les opérations de lavage successives débarrassent le produit de toutes les salissures de moulage et principalement des divers agents chimiques qui participent à la vulcanisation. Ainsi par cette opération de lavage, la vulcanisation du produit se trouve stoppée ou fortement réduite.

Dans la forme de réalisation choisie, chaque organe presseur 77 est constitué par un rouleau cylindrique, pourvu selon son axe de rotation, de deux tourillons d'extrémité guidé en rotation dans deux paliers de la structure de l'unité de lavage 14. Le moyen moteur sera constitué par exemple par un moteur électrique 78 lié par des transmissions 79 de mouvement du type chaîne et pignons aux deux séries de rouleaux presseurs 77, et les rouleaux 77 de chaque série seront accouplés l'un à l'autre par des trains de pignons 80 qui assurent leur rotation tous dans un même sens contraire au sens de rotation des rouleaux presseurs de l'autre série.
Le moyen d'injection de l'agent de lavage dans les intervalles entre les rouleaux sera constitué par des buses 81 disposées dans lesdits intervalles et connectées à une conduite 82 d'alimentation en agent de lavage elle-même connectée à une pompe 83 connue en soi destinée à puiser l'agent de lavage dans une réserve 84 et à le délivrer à la conduite d'alimentation 82.

L'unité de séchage 15 tout comme l'unité de lavage 14 est constituée de deux séries d'au moins deux organes presseurs 85, montees l'une au-dessus de l'autre, afin de définir un canal de pressage et de dilatation des produits, comportant une entrée de produits et une sortie de produits, l'entrée de produit étant avantageusement en regard de la sortie des produits de l'unité de lavage. Les organes presseurs 85 sont entraînés en rotation sur eux-mêmes par un moyen moteur pour entraîner les produits dans le canal depuis l'entrée de ce dernier vers la sortie. Les organes presseurs de chaque série sont disposés au droit des organes presseurs de l'autre et les organes presseurs de chaque série sont écartés l'un de l'autre de façon à ménager entre eux un intervalle dans lequel de l'air chaud et sec est introduit par un moyen d'injection en sorte de sécher les produits.

Comme pour la machine de lavage, chaque organe presseur 85 est constitué par un rouleau cylindrique, pourvu selon son axe de rotation, de deux tourillons d'extrémité guidé en rotation dans deux paliers de la structure de l'unité de lavage 14. Le moyen moteur sera constitué par exemple par un moteur électrique 86 lié par des transmissions 87 de mouvement du type chaîne et pignons aux deux séries de rouleaux presseurs 85, et les rouleaux 85 de chaque série seront accouplés l'un à l'autre par des trains de pignons 88 qui assurent leur rotation tous dans un même sens contraire au sens de rotation des rouleaux presseurs de l'autre série.

Le moyen d'injection en air chaud et sec sera constitué par plusieurs buses 89 d'injection d'air chaud disposées dans les intervalles entre les rouleaux presseurs 85, les dites buses étant connectées à une conduite d'alimentation 90 elle-même connectée à une centrale de production d'air chaud et sec 91. Sera également prévu un moyen d'extraction d'air constitué par un organe aspirateur.

Avantageusement à l'unité de séchage telle que décrite est associé un séchoir à micro-ondes, ce séchoir étant disposé en regard de la sortie de l'unité de séchage et étant destiné à parachever le séchage des articles.

Avantageusement chaque rouleau presseur 77, 85 est pourvu de deux rainures en hélices creusées dans sa face cylindrique, lesdites rainures étant symétriques par rapport à la section droite médiane du rouleau de façon à maintenir l'article dans l'axe du canal lors de son entraînement depuis l'entrée vers la sortie.

Les aménagements de l'installation tels que décrits autorisent des cadences de fabrication élevées et des temps de séjour dans le four, réduits, de l'ordre de quelques minutes.

Il va de soi que la présente invention peut recevoir tous aménagements et toutes variantes sans pour autant sortir du cadre du présent brevet.

## Revendications

1. Installation de fabrication d'articles moulés en latex, comprenant des moules (2) dans chacun desquels est destinée à être introduite une mousse de latex, un four (1) du type autoclave, dans la chambre de vulcanisation (1a) duquel sont destinés à être introduits les moules en vue de la vulcanisation de la mousse de latex qu'ils contiennent et en vue de la formation des articles, ladite installation comprenant de plus un poste de remplissage (9) des moules (2) en mousse de latex, un poste de démoulage (10) des articles de leurs moules (2), une unité de lavage (14) et une unité de séchage (15) des articles démoulés, **caractérisée en ce que** :
- la chambre de vulcanisation du four est délimitée par une enveloppe (1b) maintenue à distance des parois latérales et supérieure du four, posée sur la paroi inférieure du four, ladite enveloppe délimitant avec les dites parois laterales et supérieure une enceinte (1c), en communication avec la chambre de vulcanisation par des passages ménagés en partie inférieure de l'enveloppe,
- l'enceinte (1c) est obturée en extrémité,
- le four présente en partie supérieure au moins une bouche d'introduction de vapeur d'eau sous pression et température élevées et en partie inférieure au moins une bouche d'extraction de la vapeur et d'évacuation de l'eau condensée ladite bouche d'introduction étant en communication avec l'enceinte formée autour de la chambre de vulcanisation,
- la chambre de vulcanisation (1a) comprend une ouverture de chargement (5) et une ouverture de déchargement (7), opposées, obturables chacune par une porte (6), (8) à mouvements d'ouverture et fermeture commandés.

2. Installation selon la revendication 1, **caractérisée en ce que** :
- les moules (2) sont prédisposés côte à côte en fixation sur au moins un support horizontal (3),
- la chambre de vulcanisation (1a) du four (1) est sous forme de tunnel rectiligne,
- le poste de remplissage (9) et le poste de démoulage (10) sont disposés de manière attenante l'un à l'autre, dans l'alignement l'un de l'autre et de manière latérale au four (1),
- dans l'axe de la chambre de vulcanisation (1a) du four, en regard de l'ouverture de déchargement, (7) est prévue une zone de refroidissement (11) des moules (2),
- entre le poste de remplissage (9) et le four (1) est prévu un premier dispositif de transfert (12) destiné à recevoir dudit poste de remplissage l'ensemble support horizontal et moules et introduire cet ensemble dans la chambre de vulcanisation du four par passage au travers de l'ouverture de chargement,
- le four est équipé dans la chambre de vulcanisation (1a) d'un moyen de positionnement (33) de l'ensemble support horizontal (3) et moules (2) qui assure le maintien dudit ensemble à écartement des parois longitudinales verticales et horizontales de ladite chambre, de façon que la vapeur lors de la vulcanisation puisse se répartir uniformément dans la chambre du four autour de l'ensemble cadre support et moules,
- sont prévus des moyens de centrage longitudinal de l'ensemble support horizontal et moules, dans la chambre de vulcanisation du four avant fermeture des portes,
- entre la zone de refroidissement (11) et le poste de démoulage (10) est prévu un second dispositif de transfert (13) destiné à recevoir de la zone de refroidissement (11), l'ensemble support horizontal (3) et moules (2) et le transférer vers le poste de démoulage (10),
- les deux dispositifs de transfert (12), (13) et la zone de refroidissement (11) sont constitués chacun par une structure tridimensionnelle pourvue d'au moins un chemin de guidage (45), (4/) et de support, horizontal, rectiligne, parallèle à l'axe longitudinal de la chambre de vulcanisation (1a) du four, destiné à recevoir l'ensemble support horizontal et moules, la zone de refroidissement (11) étant fixe et les deux dispositifs de transferts (12), (13) étant dèplaçables en translation sur des rails de guidage (49) par des moyens moteurs (52), (53), (54), (55) entre une position alignée avec le poste de remplissage (9) et une position alignée avec la chambre de vulcanisation (1a) du four pour le premier dispositif de transfert (12) et entre une position alignée avec la zone de refroidissement (11) et une position alignée avec le poste de démoulage (10) pour le second dispositif de transfert (13),
- les dits moyens de transferts (12), (13) et ladite zone de refroidissement (11) sont équipés de moyens de propulsion (56) de l'ensemble cadre horizontal (3) et moules (2) sur leurs chemins respectifs tant dans le sens de l'introduction dudit ensemble sur leur chemin que dans le sens de leur extraction.

3. Installation selon la revendication 2, **caractérisée en ce que** chaque moule (2) est constitué par un élément inférieur de moule (2a), formant un creux et un élément supérieur de moule (2b) destiné à venir recouvrir l'élément inférieur et former avec ce dernier une cavité de moulage dans laquelle par passage au travers d'un perçage ménagé dans la paroi de l'élément supérieur (2b) est introduite, au niveau du poste de moulage, de la mousse de latex, les deux éléments de moule comportant une embase périphérique (2c), (2d), l'embase périphérique de l'élément inférieur étant plus large que l'embase périphérique de l'élément supérieur, le moule (2) prenant appui par l'embase (2c) de l'élément inférieur (2a), sur le support horizontal (3).

4. Installation selon la revendication 3, **caractérisée en ce que** le support horizontal (3) est constitué par un cadre support formé de deux longerons joints par une pluralité de traverses délimitant successivement avec les longerons des cellules dans lesquelles sont disposés les moules (2), lesquels reposent par deux cotés opposés de l'embase périphérique (2c) de l'élément inférieur (2a) sur deux les deux longerons, et que l'élément inférieur de moule est pourvu d'au moins un élément en forme de fourche destiné à être disposé autour d'un des longerons afin d'assurer le positionnement dudit moule par rapport au dit support.

5. Installation selon l'une quelconque des revendications précédentes, **caractérisée en ce que** chaque porte d'obturation (6), (8) de la chambre de vulcanisation (1a) du four est mobile verticalement dans des glissières verticales, fixées au four, entre une position basse d'ouverture de la chambre de vulcanisation du four et une position haute de fermeture de la chambre de vulcanisation du four, et est mobilisée entre ces deux positions par au moins un organe moteur (16) sur le circuit de commande duquel est disposé un élément de sécurité (17) lequel lorsqu'il est actionné, commande l'activation de l'organe moteur (16) dans le sens de l'ouverture de la porte, cet organe de sécurité étant associé a une plaque de sécurité (18) solidaire de la porte et montée de maniere mobile en translation verticale au-dessus du bord supérieur de la porte de sorte qu'une action sur cette plaque dirigée vers la porte conduise à actionner l'organe de sécurité et à entraîner la porte vers sa position d'ouverture.

6. Installation selon la revendication 5, **caractérisée en ce que** l'organe moteur (16) est constitué par un vérin pneumatique solidaire par sa tige de la structure du four et par son corps de la porte du four, ledit vérin, par son corps étant introduit dans un logement vertical pratiqué dans la porte comprenant ouverture inférieure dans la rive inférieure de la porte pour le passage du corps et une ouverture supérieure dans la rive supérieure de la porte au niveau de laquelle est positionné l'élément de sécurité (17) lequel est constitué par une soupape connectée à la chambre arrière du vérin, ladite soupape lorsqu'elle est actionnée, place ladite chambre arrière à la décharge.

7. Installation selon la revendication 5 ou la revendication 6, **caractérisée en ce que** chaque porte (6) (8) est associée à au moins un mécanisme de verrouillage (23) qui assure le verrouillage de sa position fermée, ledit mécanisme de verrouillage étant constitué d'une part d'une patte verticale (24) avec perçage, solidaire de la porte et d'autre part d'une clavette (25) solidaire de la structure du four actionnée par un organe moteur (26) entre une position d'effacement selon laquelle elle est écartée de la patte et une position de verrouillage selon laquelle elle est engagée dans le perçage de la patte.

8. Installation selon l'une quelconque des revendications précédentes, **caractérisée en ce que** le four (1) autour de chacune des ouvertures (5), (7) de la chambre de vulcanisation (1a) est équipée d'une gorge continue (27) dans laquelle est disposé un joint d'étanchéité (28), formant piston dans la gorge, ladite gorge étant connectée à une source d'air comprimé par l'intermédiaire d'une électrovanne, et en position de fermeture de la porte, est alimentée en air comprimé via l'électrovanne, ce qui repousse le joint d'étanchéité contre la porte et assure l'étanchéité à ce niveau ladite rainure est par ailleurs connectée via une seconde électrovanne à une source à dépression et est connectée à cette source avant ouverture de la porte de façon que sous l'effet de l'aspiration créée, le joint d'étanchéité soit ramené intégralement dans la gorge et soit dégagé de la porte.

9. Installation selon l'une quelconque des revendications 2 à 8, **caractérisée en ce que** le moyen de positionnement (33) dans la chambre de vulcanisation (1a) du four de l'ensemble support horizontal (3) et moules (2) est constitué par au moins deux cadres verticaux (34) formés par assemblage de longerons et traverses, disposés dans la chambre de vulcanisation (1a) du four en vis-à-vis l'un de l'autre, parallèlement à l'axe longitudinal du four, contre les faces internes verticales de ladite chambre et par au moins un chemin horizontal de guidage et de support (4) de l'ensemble support horizontal (3) et moules (2), solidaire des deux cadres et s'étendant d'une des deux ouvertures à l'autre, ledit chemin étant disposé intégralement dans l'intervalle entre les cadres de façon que des passages de vapeur soient ménagés entre ledit chemin et les faces latérales verticales de la chambre de vulcanisation du four.

10. Installation selon les revendications 2 et 9 prisent ensemble, **caractérisée en ce que** les chemins de guidage (47), (45), (4) des dispositifs de transfert (12), de la zone de refroidissement (11) et du moyen de positionnement (33) de l'ensemble support horizontal (3) et moules (2) dans la chambre de vulcanisation (1a) du four (1) sont tous disposés selon un même plan géométrique horizontal.

11. Installation selon l'une quelconque des revendications 2 a 10, **caractérisée en ce que** le chemin de guidage (47) de chaque dispositif de transfert (12), (13), est constitué par deux séries de galets (48) de même diamètre, disposées en vis-à-vis l'une de l'autre, en écartement l'une de l'autre, lesdits galets étant montés fous, en porte-à-faux, sur des axes horizontaux, perpendiculaires à l'axe longitudinal du chemin de guidage, lesdits axes étant fixés par leur extrémité proximale à la structure du dispositif de transfert et étant disposés selon un méme plan géométrique horizontal.

12. Installation selon l'une quelconque des revendications 2 a 11, **caractérisée en ce que** le chemin de guidage (45) de la zone de refroidissement (11) est constitué également par deux séries de galets (46) de même diamètre, disposées en vis-à-vis l'une de l'autre, en écartement l'une de l'autre, lesdits galets étant montés fous, en porte-à-faux, sur des axes horizontaux, perpendiculaires à l'axe longitudinal du chemin de guidage, lesdits axes étant fixés par leur extrémité proximale à la structure de la zone de refroidissement et étant disposés selon un même plan géométrique horizontal.

13. Installation selon la revendication 9 ou la revendication 10, **caractérisée en ce que** le chemin de guidage (4) du moyen du moyen de positionnement (33) de l'ensemble support horizontal (3) et moules (2) est constitué par deux séries de galets (36) de même diamètre, disposées en vis-à-vis l'une de l'autre, en écartement l'une de l'autre, lesdits galets étant montés fous, en porte-à-faux, sur des axes horizontaux, perpendiculaires à l'axe longitudinal du chemin de guidage, lesdits axes étant fixés par leur extrémité proximale aux traverses des cadres du moyen de positionnement et étant disposés selon un même plan géométrique horizontal.

14. Installation selon l'une quelconque des revendications 2 à 13, **caractérisée en ce que** le moyen de propulsion (56) de chaque dispositif de transfert (12), (13) et de la zone de refroidissement (11) est constitué par au moins un galet tangent (57) au chemin de guidage (47), (45), accouplé à l'arbre de sortie d'un organe moteur (58) fixé à un châssis solidaire de la structure du dispositif de transfert ou de la zone de refroidissement, ledit galet par son axe de rotation étant perpendiculaire audit chemin de guidage et venant en pression contre un des longerons de l'élément support (3) en sorte que par rotation autour de son axe, il imprime à l'élément support un mouvement de translation sur le chemin de guidage.

15. Installation selon l'une quelconque des revendications 2 à 14, **caractérisée en ce que** les moyens de centrage longitudinal de l'ensemble support horizontal et moules, dans la chambre de vulcanisation du four avant fermeture des portes, comprend un ensemble de poussée (59) solidaire de l'extrémité avant du premier dispositif de transfert (12) et un ensemble de butée (60) solidaire du four (1) et disposé de manière attenante à l'ouverture de déchargement (7), lesdits ensemble de poussée (59) et de butée (60) étant actionnés chacun par au moins un moyen moteur (59a), (66), (68) entre une position d'effacement selon laquelle ils sont degages de la trajectoire de l'ensemble support horizontal (3) et moules (2) et une position active selon laquelle ils sont sécants à ladite trajectoire et disposés dans la chambre de vulcanisation (1a) du four (1) à écartement des ouvertures (5), (7) de façon à dégager l'ensemble support (3) et moules (2) de la trajectoire des portes (6) et (8), ledit élément de poussée (59) étant activé après que l'ensemble support horizontal et moules ait quitté les rails du dispositif de transfert afin de venir agir en poussée sur l'extrémité arrière du support horizontal et amener l'extrémité avant dudit support, en butée contre l'élément de butée (60) préalablement disposé selon sa position active.

16. Installation selon la revendication 15, **caractérisée en ce que** l'ensemble de poussée (59) est constitué par une barre verticale (61) montée en extrémité d'une structure de bras (62) fixée à un arbre vertical (63) monté libre en rotation et fixe en translation dans des paliers de la structure du premier moyen de transfert (12), ledit arbre étant accouplé au moyen moteur (59a).

17. Installation selon la revendication 15, **caractérisée en ce que** l'ensemble de butée (60) comprend une platine verticale (64) solidaire d'un des flans latéraux verticaux du four et parallèle aux dits flancs, portant un premier élément de butée (65), mobile sous l'action d'un premier organe moteur (66) parallèlement à l'ouverture de déchargement de la chambre de vulcanisation (1a) du four, entre une position d'effacement selon laquelle il est disposé en retrait latéral par rapport à la trajectoire de l'ensemble support horizontal et moules et une position d'activation selon laquelle il est sécant à ladite trajectoire, ledit premier élément de butée (65) supportant un second élément de butée (67), mobile translation sous l'action d'un second organe moteur (68) de manière perpendiculaire à l'ouverture de la chambre de vulcanisation (1a) du four, entre une position de retrait selon laquelle il est en dehors de la chambre de vulcanisation du four et en avant de l'ouverture de déchargement et une position d'activation selon laquelle il est dans la chambre de vulcanisation du four et en arrière de l'ouverture.

18. Installation selon la revendication 17, **caractérisée en ce que** :
- le premier élément de butée (65) comprend :
- une platine verticale (69) pourvue de deux ailes dont la première est perpendiculaire au plan de l'ouverture de déchargement (7) et la seconde parallèle à ladite ouverture et porte le second élément de butée (67),
- deux glissières de guidage horizontales (70), parallèles à l'ouverture de déchargement (7), disposées l'une au-dessus de l'autre, fixées chacune par une de leurs extrémités à la première aile de la platine (69) et engagées en coulissement dans deux paliers de guidage en translation fixés à la platine support (64),
- un vérin pneumatique constituant le premier organe moteur (66), ledit vérin s'étendant horizontalement entre la platine support (64) et la première aile de la platine (69) du premier élément et étant fixé par son corps à la platine support (64) et par sa tige à l'aile verticale de la platine (69) du premier élément,
- et le second élément de butée (67) comprend :
- une barre de butée (71), verticale,
- deux glissières de guidage (72), horizontales, perpendiculaires à l'ouverture (7) de déchargement, disposées l'une au-dessus de l'autre, fixées chacune par une de leurs extrémités à la barre de butée (71) et engagées en coulissement dans deux paliers de guidage en translation, fixés à la seconde aile de la platine (69) du premier élément (65),
- un vérin pneumatique constituant le second organe moteur (68), ledit vérin s'étendant horizontalement entre la barre de butée et la seconde aile de la platine (69) du premier élément (65) et étant fixé par son corps à ladite seconde aile et par sa tige à la barre de butée (71).

19. Installation selon l'une quelconque des revendications 2 à 18, **caractérisée en ce que** le poste de remplissage (9) est constitué par un bac horizontal (39), de section droite en U, ouvert en extrémité et comprenant selon son axe longitudinal, entre ses ailes verticales (40), un chemin de guidage (41) horizontal et de maintien de l'ensemble support horizontal (3) et moules (2), ledit chemin de guidage (41) étant ouvert en extrémité et ledit chemin de guidage et les chemins de guidage des dispositifs de transfert (12), (13), de la zone de refroidissement (11) et de la chambre de vulcanisation (1a) du four (I) étant coplanaires.

20. Installation selon la revendication 19, **caractérisée en ce que** le chemin de guidage (41) du poste de remplissage (9) est constitué par deux séries de galets (42) de même diamètre, disposées en vis-à-vis l'une de l'autre, en écartement l'une de l'autre, dont une est portée par l'une des ailes verticales du bac et l'autre série par l'autre aile, chaque galet de chaque série étant monté fou, en porte-à-faux, sur un axe horizontal, perpendiculaire à l'axe longitudinal du chemin de guidage, ledit axe étant fixé par son extrémité proximale à l'aile correspondante.

21. Installation selon l'une quelconque des revendications 2 à 20, **caractérisée en ce que** le poste de démoulage (10) est doté de deux ailes verticales longitudinales (43), écartées l'une de l'autre, entre lesquelles est ménagé un chemin de guidage horizontal (44) et de maintien d'un ensemble support (3) et moules (2), ledit chemin de guidage étant ouvert en extrémité, ledit chemin de guidage et les chemins de guidage des dispositifs de transfert (12), (13), du poste de remplissage (9), de la zone de refroidissement (11) et de la chambre de vulcanisation (1a) du four étant coplanaires, ledit chemin de guidage étant disposé dans l'alignement du chemin de guidage du poste de remplissage.

22. Installation selon la revendication 21, **caractérisée en ce que** le chemin de guidage (44) du poste de démoulage (9) est constitué par deux séries de galets (44a) de même diamètre, disposées en vis-à-vis l'une de l'autre, à écartement l'une de l'autre, dont une est portée par l'une des ailes verticales (43) du poste de démoulage et l'autre série par l'autre aile, chaque galet de chaque série étant monté fou, en porte-à-faux, sur un axe horizontal, perpendiculaire à l'axe longitudinal du chemin de guidage, ledit axe étant fixé par son extrémité proximale à l'aile correspondante.

23. Installation selon l'une quelconque des revendications précédentes, **caractérisée en ce que** la chambre de vulcanisation (1a) du four est équipée de plusieurs chemins de guidage et de maintien agencés selon plusieurs niveaux de hauteur pour recevoir simultanément plusieurs ensembles support horizontal et moules, qu'à chacun de ces niveaux de hauteur, les dispositifs de transfert (12), (13) et la zone de refroidissement (11) comportent chacun un chemin de guidage et de maintien d'un ensemble support horizontal et moules et que les postes de remplissage (9) et de démoulage (10) sont chacun mobiles en translation verticale entre les différents niveaux de hauteur sous l'action d'un moyen moteur qui leur est propre, ledit moyen moteur assurant d'autre part leur positionnement en hauteur selon le niveau de hauteur choisi.

24. Installation selon l'une quelconque des revendications 2 à 23, **caractérisée en ce que** l'unité de lavage (14) est constituée de deux séries d'au moins deux organes presseurs (77), montées l'une au dessus de l'autre, afin de définir un canal de pressage et de dilatation des produits, comportant une entrée de produits et une sortie de produits, les dits organes presseurs (77) étant entraînés en rotation sur eux mêmes par un moyen moteur pour entraîner les produits dans le canal depuis l'entrée de ce dernier vers la sortie, les organes presseurs de chaque série étant disposés au droit des organes presseurs de l'autre et les organes presseurs de chaque série étant écartés l'un de l'autre de façon à ménager entre eux un intervalle dans lequel l'article moulé peut se dilater, ladite unité de lavage, étant équipée de plus, d'un moyen d'injection d'un agent liquide de lavage dans l'intervalle sus défini de façon que l'article en latex lors de son expansion dans le dit intervalle puisse se charger en agent liquide de lavage.

25. Installation selon l'une quelconque des revendications 2 à 24, **caractérisée en ce que** l'unité de séchage (15) est constituée de deux séries d'au moins deux organes presseurs (85), montées l'une au-dessus de l'autre, afin de définir un canal de pressage et de dilatation des produits, comportant une entrée de produits et une sortie de produits, ladite entrée de produit étant en regard de la sortie des produits de l'unité de lavage, lesdits organes presseurs étant entraînés en rotation sur eux-mêmes par un moyen moteur pour entraîner les produits dans le canal depuis l'entrée de ce dernier vers la sortie, les organes presseurs de chaque série étant disposés au droit des organes presseurs (85) de l'autre et les organes presseurs (85) de chaque sérié étant écartés l'un de l'autre de façon à ménager entre eux un intervalle dans lequel de l'air chaud et sec est introduit par un moyen d'injection en sorte de sécher les produits, ladite unité de séchage étant de plus associée à un séchoir à micro-ondes.

26. Installation selon la revendication 22 ou la revendication 23, **caractérisée en ce que** les organes presseurs (77), (85) sont constitués chacun par un rouleau cylindrique, pourvu de deux rainures en hélices creusées dans sa face cylindrique, lesdites rainures etant symétriques par rapport à la section droite médiane du rouleau de façon à maintenir l'article dans l'axe du canal lors de son entraînement depuis l'entrée vers la sortie.

27. Installation selon la revendication l'une quelconque des revendications 2 à 26, **caractérisée en ce que** l'élément inférieur de moulage (2a), en saillie par rapport à son embase périphérique, est doté d'une paroi sans fin (2f), de faible épaisseur, formant la partie supérieure de la cavité de moulage, que le bord supérieur de cette paroi sans fin (2f) est disposé selon le plan de joint et que contre ce bord supérieur est rabattu l'élément supérieur (2b) pour la fermeture du moule, ladite paroi sans fin constituant élément apte à trancher les bavures.

## Patentansprüche

1. Einrichtung zur Herstellung von geformten Gegenständen aus Latex mit Formen (2), die dazu bestimmt sind, daß in sie ein Latexschaum eingefüllt wird, mit einem Ofen (1) vom Typ Autoclav mit einer Vulkanisationskammer (1a), die dazu bestimmt ist, daß die Formen in sie eingeführt werden, um den in ihnen enthaltenen Latexschaum zu vulkanisieren und die Gegenstände zu formen, wobei die Einrichtung außerdem eine Füllstation (9), wo die Formen (2) mit Latexschaum gefüllt werden, eine Entformstation (10), wo die Gegenstände aus ihren Formen (2) entformt werden, eine Wascheinheit (14) und eine Trockeneinheit (15) für die entformten Gegenstände aufweist, **dadurch gekennzeichnet, daß**:
- die Vulkanisationskammer des Ofens durch einen Mantel (1b) begrenzt ist, der in einem Abstand von den Seitenwänden und der oberen Wand des Ofens gehalten ist und der auf der unteren Wand des Ofens ruht, wobei der Mantel mit den Seitenwänden und der oberen Wand einen Raum (1c) bildet, der mit der Vulkanisationskammer durch im unteren Teil des Mantels ausgebildete Kanäle in Verbindung steht,
- der Raum (1c) am Ende verschlossen ist,
- der Ofen an seinem oberen Teil mindestens eine Düse zum Einleiten von Wasserdampf unter hohem Druck und hoher Temperatur und in seinem unteren Teil mindestens eine Düse zum Ausleiten des Dampfes und zur Abführung des kondensierten Wassers aufweist, wobei die Einleitungsdüse in Verbindung mit dem rings um die Vulkanisationskammer gebildeten Raum steht,
- die Vulkanisationskammer (1a) eine Ladeöffnung (5) und eine Entladeöffnung (7) aufweist, die einander gegenüber angeordnet sind und jede durch eine Tür (6), (8) mit gesteuerten Öffnungs- und Schließbewegungen verschließbar sind.

2. Einrichtung nach Anspruch 1, **dadurch gekennzeichnet, daß**
- die Formen (2) in vorbestimmter Weise nebeneinander auf mindestens einem horizontalen Träger (3) festgehalten sind,
- die Vulkanisationskammer (1a) des Ofens (1) die Form eines geraden Tunnels hat,
- die Füllstation (9) und die Entformstation (10) aneinander stoßend die eine in der Linie der anderen und seitlich zum Ofen (1) angeordnet sind,
- in der Achse der Vulkanisationskammer (1a) des Ofen gegenüber der Entladeöffhung (7) eine Kühlzone (11) der Formen (2) vorgesehen ist,
- zwischen der Füllstation (9) und dem Ofen (1) eine erste Transfervorrichtung (12) vorgesehen ist, die dazu bestimmt ist, von der Füllstation die Anordnung von horizontalem Träger und Formen zu empfangen und diese Anordnung unter Durchtritt durch die Ladeöffnung in die Vulkanisationskammer des Ofens (1) einzuführen,
- der Ofen in der Vulkanisationskammer (1a) mit einer Positionierungsvorrichtung (33) der Anordnung von waagerechtem Träger (3) und Formen (2) ausgerüstet ist, die dafür sorgt, daß die Anordnung in einem Abstand von den vertikalen und horizontalen Längswänden der Kammer gehalten wird, so daß der Dampf bei der Vulkanisation sich gleichmäßig in der Kammer des Ofens um die Anordnung Trägerrahmen und Formen herum verteilen kann,
- Vorrichtungen zur Längszentrierung der Anordnung horizontaler Träger und Formen in der Vulkanisationskammer des Ofens vor dem Schließen der Türen vorgesehen sind,
- zwischen der Kühlzone (11) und der Entformstation (10) eine zweite Transfervorrichtung (13) vorgesehen ist, die dazu dient, von der Kühlzone (11) die Anordnung horizontaler Träger (3) und Formen (2) zu empfangen und sie zur Entformstation (10) zu fördern,
- die zwei Transfervorrichtungen (12), (13) und die Kühlzone (11) jede aus einer dreidimensionalen Struktur bestehen, die mit mindestens einer Führungs- und Trägerstrecke (45), (47) ausgerüstet ist, die horizontal, geradlinig, parallel zur Längsachse der Vulkanisationskammer (1a) des Ofens und zur Aufnahme der Anordnung horizontaler Träger und Formen bestimmt ist, wobei die Kühlzone (11) fest ist und die zwei Transfervorrichtungen (12), (13) auf Führungsschienen (49) durch Antriebsvorrichtungen (52), (53), (54), (55) zwischen einer in einer Linie mit der Füllstation (9) liegenden Position und einer in einer Linie mit der Vulkanisationskammer (1a) des Ofens liegenden Position für die erste Transfervorrichtung (12) und zwischen einer in einer Linie mit der Kühlzone (11) liegenden Position und einer in einer Linie mit der Entformstation (10) liegenden Position für die zweite Transfervorrichtung verschiebbar sind,
- die Transfervorrichtungen (12), (13) und die Kühlzone (11) mit Antriebsvorrichtung (56) für die Anordnung horizontaler Rahmen (3) und Formen (2) auf ihren jeweiligen Strecken sowohl in Richtung der Einführung der Anordnung auf ihrer Strecke wie im Sinn ihrer Herausführung ausgerüstet sind.

3. Einrichtung nach Anspruch 2, **dadurch gekennzeichnet, daß** jede Form (2) aus einem unteren Formelement (2a), das eine Vertiefung bildet, und einem oberen Formelement (2b) besteht, das zur Abdeckung des unteren Formelements bestimmt ist und mit diesem einen Formhohlraum bildet, in welchen durch eine in der Wand des oberen Elements (2b) ausgebildete Bohrung auf der Höhe der Formstation der Latexschaum eingefüllt wird, wobei die zwei Formelemente einen Umfangsansatz (2c), (2d) aufweisen, von denen der Umfangsansatz des unteren Elements breiter als der Umfangsansatz des oberen Elements ist und die Form (2) sich mittels des Ansatzes (2c) des unteren Elements (2a) auf dem horizontalen Träger (3) abstützt.

4. Einrichtung nach Anspruch 3, **dadurch gekennzeichnet, daß** der horizontale Träger (3) aus einem Tragrahmen besteht, der aus zwei Längsträgern gebildet ist, die durch eine Mehrzahl von Querträgern verbunden sind, die aufeinanderfolgend mit den Längsträgern Zellen begrenzen, in denen die Formen (2) angeordnet sind, die mit ihren zwei gegenüberliegenden Seiten des umlaufenden Ansatzes (2c) des unteren Elements (2a) auf den zwei Längsträgern ruhen, und daß das untere Formelement mit mindestens einem gabelförmigen Element versehen ist, das dazu dient, einen der Längsträger zu übergreifen, um die Positionierung der Form bezüglich des Trägers zu sichern.

5. Einrichtung nach einem der vorangehenden Ansprüche, **dadurch gekennzeichnet, daß** jede Verschlußtür (6), (8) der Vulkanisationskammer (1a) des Ofens vertikal in vertikalen Gleitschienen, die am Ofen befestigt sind, zwischen einer unteren Öffilungsstellung der Vulkanisationskammer des Ofens und einer oberen Schließstellung der Vulkanisationskammer des Ofens beweglich ist und zwischen diesen Positionen durch mindestens ein Antriebselement (16) bewegt wird, in dessen Steuerkreis ein Sicherheitselement (17) angeordnet ist, das bei seiner Betätigung die Aktivierung des Antriebselements (16) im Sinn der Öffnung der Tür steuert, wobei dieses Sicherheits-element mit einer Sicherheitsplatte (18) zusammenwirkt, die fest mit der Tür verbunden und oberhalb der Oberkante der Tür vertikal verschiebbar beweglich ist, so daß eine in Richtung auf die Tür gerichtete Einwirkung auf diese Platte das Sicherheitselement betätigt und die Tür in ihre Öffnungsstellung bewegt.

6. Einrichtung nach Anspruch 5, **dadurch gekennzeichnet, daß** das Antriebselement (16) aus einem pneumatischen Arbeitszylinder besteht, der durch seine Stange fest mit der Ofenkonstruktion und mit seinem Körper mit der Tür des Ofens verbunden ist, wobei der Arbeitszylinder durch seinen Körper in einen in der Tür ausgebildeten vertikalen Sitz eingeführt ist, und die Tür eine untere Öffnung im unteren Randbereich der Tür für den Durchtritt des Körpers und eine obere Öffnung im oberen Randbereich der Tür aufweist, auf deren Höhe das Sicherheitselement (17) angeordnet ist, das aus einem Ventil besteht, das mit der hinteren Kammer des Arbeitszylinders verbunden ist, wobei das Ventil bei seiner Betätigung die hintere Kammer auf Entladung stellt.

7. Einrichtung nach Anspruch 5 oder Anspruch 6, **dadurch gekennzeichnet, daß** jede Tür (6), (8) mit mindestens einem Verriegelungsmechanismus (23) zusammenwirkt, der die Verriegelung ihrer geschlossenen Stellung gewährleistet, wobei der Verriegelungsmechanismus einerseits aus einem vertikalen Lappen (24) mit Durchbohrung besteht, der fest mit der Tür verbunden ist, und andererseits aus einem Keil (25), der fest mit der Ofenkonstruktion verbunden ist und durch ein Antriebselement (26) zwischen einer Ausrückstellung, in der er von dem Lappen entfernt ist, und einer Verriegelungsstellung, in der er in die Bohrung des Lappens eingreift, betätigbar ist.

8. Einrichtung nach einem der vorangehenden Ansprüche, **dadurch gekennzeichnet, daß** der Ofen (1) um jede seiner Öffnungen (5), (7) der Vulkanisationskammer (1a) mit einer durchgehenden Nut (27) versehen ist, in der eine Dichtung (28) angeordnet ist, die in der Nut einen Kolben bildet, wobei die Nut über ein Elektroventil mit einer Druckluftquelle verbunden ist und in der Schließstellung der Tür über das Elektroventil mit Druckluft versorgt wird, was die Dichtung gegen die Tür drückt und die Abdichtung auf dieser Höhe besorgt, und die Nut im übrigen über ein zweites Elektroventil mit einer Unterdruckquelle verbunden und mit dieser Quelle vor dem Öffnen der Tür verbunden ist, so daß die Dichtung unter der Wirkung des erzeugten Unterdrucks voll in die Nut zurückgezogen wird und von der Tür abgelöst ist.

9. Einrichtung nach einem der Ansprüche 2 bis 8, **dadurch gekennzeichnet, daß** die Positionierungsvorrichtung (33) in der Vulkanisationskammer (1a) des Ofens für die Positionierung der Anordnung von horizontalem Träger (3) und Formen (2) aus mindestens zwei vertikalen Rahmen (34) besteht, die durch Zusammensetzen von Längsträgern und Querträgern gebildet sind, die in der Vulkanisationskammer (1a) des Ofens einander gegenüber parallel zur Längsachse des Ofens angeordnet sind und zwar gegen die inneren vertikalen Flächen der Kammer, und aus mindestens einer horizontalen Führungs- und Trägerbahn (4) der Anordnung von horizontalem Träger (3) und Formen (2), die mit zwei Rahmen verbunden ist und sich von einer der zwei Öffnungen zur anderen erstreckt, wobei die Bahn vollständig im Zwischenraum zwischen den Rahmen so angeordnet ist, daß Dampfdurchtrittsöffnungen zwischen der Bahn und den vertikalen Seitenflächen der Vulkanisationskammer des Ofens ausgebildet sind.

10. Einrichtung nach den Ansprüchen 2 und 9 zusammengenommen, **dadurch gekennzeichnet, daß** die Führungsbahnen (47), (45), (4) der Übertragunsvorrichtungen (12), der Kühlzone (11) und der Positionierungsvorrichtung (33) der Anordnung von horizontalem Träger (3) und Formen (2) in der Vulkanisationskammer (1a) des Ofens (1) alle in der gleichen horizontalen geometrischen Ebene angeordnet sind.

11. Einrichtung nach einem der Ansprüche 2 bis 10, **dadurch gekennzeichnet, daß** die Führungsbahn (47) jeder Transfervorrichtung (12), (13) aus zwei Reihen von Rollen (48) von gleichem Durchmesser besteht, die einander gegenüber und in einem Abstand von einander angeordnet und freilaufend freitragend an horizontalen Achsen montiert sind, die senkrecht zur Längsachse der Führungsbahn sind, wobei die Achsen mit ihrem nächstliegenden Ende am Gerüst der Transfervorrichtung befestigt und in ein und derselben horizontalen geometrischen Ebene angeordnet sind.

12. Einrichtung nach einem der Ansprüche 2 bis 11, **dadurch gekennzeichnet, daß** die Führungsbahn (45) der Kühlzone (11) ebenfalls aus zwei Reihen von Rollen (46) von gleichem Durchmesser besteht, die einander gegenüber und in einem Abstand voneinander angeordnet sind, wobei die Rollen frei drehbar freitragend an horizontalen Achsen montiert sind, die senkrecht zur Längsachse der Führungsbahn verlaufen, wobei die Achsen mit ihrem nächstliegenden Ende an dem Gerüst der Kühlzone befestigt und in ein und derselben horizontalen geometrischen Ebene angeordnet sind.

13. Einrichtung nach Anspruch 9 oder Anspruch 10, **dadurch gekennzeichnet, daß** die Führungsbahn (4) der Positionierungsvorrichtung (33) der Anordnung von horizontalem Träger (3) und Formen (2) aus zwei Reihen von Rollen (36) von gleichem Durchmesser besteht, die einander gegenüber und in einem Abstand von einander angeordnet sind, wobei die Rollen freilaufend und freitragend an horizontalen Achsen montiert sind, die senkrecht zur Längsachse der Führungsbahn verlaufen und wobei die Achsen mit ihrem nächstliegenden Ende an Querträgern von Rahmen der Positionierungsvorrichtung befestigt und in ein und derselben horizontalen geometrischen Ebene angeordnet sind.

14. Einrichtung nach einem der Ansprüche 2 bis 13, **dadurch gekennzeichnet, daß** die Antriebsvorrichtung (56) jeder Transfervorrichtung (12), (13) und der Kühlzone (11) aus mindestens einer zur Führungsbahn (47), (45) tangentialen Rolle (57) besteht, die mit der Abtriebswelle eines Antriebselements (58) gekoppelt ist, das an einem mit dem Gerüst der Transfervorrichtung oder Kühlzone festverbundenen Chassis befestigt ist, wobei die Rolle mit ihrer Drehachse senkrecht zur Führungsbahn ist und in Andruck gegen einen der Längsträger des Tragelements (3) gelangt, so daß sie durch Drehung um ihre Achse dem Tragelement eine Verschiebungsbewegung auf der Führungsbahn aufzwingt.

15. Einrichtung nach einem der Ansprüche 2 bis 14, **dadurch gekennzeichnet, daß** die Vorrichtung zur Längszentrierung der Anordnung von horizontalem Träger und Formen in der Vulkanisationskammer des Ofens vor dem Schließen der Türen eine Schubvorrichtung (59), die mit dem Vorderende der ersten Transfervorrichtung (12) verbunden ist, und eine Anschlagvorrichtung (60), die mit dem Ofen (1) verbunden und angrenzend an die Entladeöffnung (7) angeordnet ist, aufweist, wobei die Schubvorrichtung (59) und Anschlagvorrichtung (60) jede durch mindestens ein Antriebsmittel (59a), (66), (68) zwischen einer weggeschobenen Stellung, in der sie von der Laufstrecke der Anordnung horizontaler Träger (3) und Form (2) entfernt sind, und einer aktiven Stellung, in der sie diese Laufstrecke schneiden und in der Vulkanisationskammer (1a) des Ofens (1) in einem Abstand von den Öffnungen (5), (7) angeordnet sind, betätigt werden, so daß die Anordnung Träger (3) und Formen (2) außerhalb der Laufstrecke der Türen (6) und (8) ist, wobei das Schubelement (59) aktiv ist, nachdem die Anordnung von horizontalem Träger und Formen die Schienen der Transfervorrichtung verlassen hat, um mit Druck auf das hintere Ende des horizontalen Trägers einzuwirken und das vordere Ende des Trägers in Anschlag gegen die Anschlagvorrichtung (60) zu bringen, die zuvor in ihrer aktiven Stellung angeordnet wurde.

16. Einrichtung nach Anspruch 15, **dadurch gekennzeichnet, daß** die Schubvorrichtung (59) aus einer vertikalen Stange (61) besteht, die am Ende einer Armstruktur (62) montiert ist, die an einer vertikalen Welle (63) befestigt ist, die frei drehbar und verschiebungsfest in Lagern der Konstruktion der ersten Transfervorrichtung (12) montiert ist, wobei die Welle mit der Antriebsvorrichtung (59a) gekoppelt ist.

17. Einrichtung nach Anspruch 15, **dadurch gekennzeichnet, daß** die Anschlagsvorrichtung (60) eine vertikale Platine (64) umfaßt, die mit einer der vertikalen seitlichen Flanken des Ofens verbunden und zu diesen Flanken parallel ist und ein erstes Anschlagelement (65) trägt, das unter der Wirkung eines ersten Antriebselements (66) parallel zur Entladeöffnung der Vulkanisationskammer (1a) des Ofens zwischen einer weggeschobenen Stellung, in der es bezüglich der Laufstrecke der Anordnung von horizontalem Träger und Formen seitlich zurückgezogen angeordnet ist, und einer Aktivierungsstellung beweglich ist, in der es diese Laufstrecke schneidet, wobei das erste Anschlagelement (65) ein zweites Anschlagelement (67) trägt, das unter der Wirkung eines zweiten Antriebselements (68) senkrecht zur Öffnung der Vulkanisationskammer (1a) des Ofens zwischen einer zurückgezogenen Stellung, in der es sich außerhalb der Vulkanisationskammer des Ofens und vor der Entladeöffnung befindet, und einer aktiven Stellung, in der es sich in der Vulkanisationskammer des Ofens und hinter der Öffnung befindet, beweglich ist.

18. Einrichtung nach Anspruch 17, **dadurch gekennzeichnet, daß**
- das erste Anschlagelement (65) aufweist:
- eine vertikale Platine (69), die mit zwei Flügeln versehen ist, von denen der erste senkrecht zur Ebene der Entladeöffnung (7) und der zweite parallel zu dieser Öffnung ist und das zweite Anschlagelement (67) trägt,
- zwei horizontale Führungsschienen (70), die parallel zur Entladeöffnung (7) die eine über der anderen angeordnet und jede mit einem ihrer Enden am ersten Flügel der Platine (69) befestigt sind und gleitend in zwei an der tragenden Platine (64) befestigten Lagern zur Führung der Verschiebung sitzen,
- ein pneumatischer Zylinder, der das erste Antriebselement (66) bildet und sich horizontal zwischen der Trägerplatine (64) und dem ersten Flügel der Platine (69) des ersten Elements erstreckt und durch seinen Körper an der Trägerplatine (64) und mit seiner Stange an dem vertikalen Flügel der Platine (69) des ersten Elements befestigt ist,
- und das zweite Anschlagelement (67) aufweist:
- eine vertikale Anschlagsstange (71),
- zwei horizontale Führungsgleitschienen (72), die senkrecht zur Entladeöffnung (7) die eine über der anderen angeordnet und jede mit einem ihrer Enden an der Anschlagsstange (71) befestigt sind und gleitend in zwei Verschiebungs-Führungslager eingreifen, die am zweiten Flügel der Platine (69) des ersten Elements (65) befestigt sind,
- einen pneumatischen Zylinder, der das zweite Antriebselement (68) bildet und sich horizontal zwischen der Anschlagstange und dem zweiten Flügel der Platine (69) des ersten Elements (65) erstreckt und mit seinem Körper an dem zweiten Flügel und mit seiner Stange an der Anschlagstange (71) befestigt ist.

19. Einrichtung nach einem der Ansprüche 2 bis 18, **dadurch gekennzeichnet, daß** die Füllstation (9) aus einem horizontalen Trog (39) mit U-Querschnitt besteht, der am Ende offen ist und in seiner Längsachse zwischen seinen vertikalen Seitenwänden (40) eine horizontale Führungsbahn (41) zum Halten der Anordnung von horizontalem Träger (3) und Formen (2) aufweist, wobei die Führungsbahn (41) am Ende offen ist und diese Führungsbahn und die Führungsbahnen der Transfervorrichtungen (12), (13), der Kühlzone (11) und der Vulkanisationskammer (1a) des Ofens (1) koplanar sind.

20. Einrichtung nach Anspruch 19, **dadurch gekennzeichnet, daß** die Führungsbahn (41) der Füllstation (9) aus zwei Reihen von Rollen (42) von gleichem Durchmesser besteht, die einander gegenüber und in Abstand von einander angeordnet sind und von denen eine Reihe von einer der vertikalen Wände des Troges und die andere Reihe von der anderen Wand getragen ist, wobei jede Rolle jeder Reihe freilaufend freitragend an einer horizontalen Achse montiert ist, die senkrecht zur Längsachse der Führungsbahn verläuft und mit ihrem nächsten Ende an der entsprechenden Wand befestigt ist.

21. Einrichtung nach einem der Ansprüche 2 bis 20, **dadurch gekennzeichnet, daß** die Entformstation (10) mit zwei vertikalen Seitenwänden (43) versehen ist, die voneinander entfernt sind und zwischen denen eine horizontale Führungsbahn (41) zum Halten einer Anordnung von Träger (3) und Formen (2) ausgebildet ist, wobei die Führungsbahn am Ende offen ist und diese Führungsbahn und die Führungungsbahnen der Transfervorrichtung (12), (13) der Füllstation (9), der Kühlzone (11) und der Vulkanisationskammer (1a) des Ofens koplanar sind und diese Führungsbahn in einer Linie mit der Führungsbahn der Füllstation angeordnet ist.

22. Einrichtung nach Anspruch 21, **dadurch gekennzeichnet, daß** die Führungsbahn (44) der Entformstation (9) aus zwei Reihen von Rollen (44a) von gleichem Durchmesser besteht, die einander gegenüber und in Abstand von einander angeordnet sind und von denen eine von einem der vertikalen Seitenwände (43) der Entformstation und die andere Reihe von der anderen Seitenwand getragen ist, wobei jede Rolle jeder Reihe freilaufend freitragend an einer horizontalen, zur Längsachse der Führungsbahn senkrechten Achse montiert ist, wobei die Achse mit ihrem der entsprechenden Seitenwand nächsten Ende befestigt ist.

23. Einrichtung nach einem der vorangehenden Ansprüche, **dadurch gekennzeichnet, daß** die Vulkanisationskammer (1a) des Ofens mit mehreren Bahnen zum Führen und Halten ausgerüstet sind, die in mehreren Höhenniveaus angeordnet sind, um gleichzeitig mehrere Anordnungen von horizontalem Träger und Formen aufzunehmen, wobei auf jeder dieser Höhenniveaus die Transfervorrichtungen (12), (13) und die Kühlzone (11) jede eine Bahn zur Führung und zum Halten einer Anordnung von horizontalem Träger und Formen aufweisen und die Füllstation (9) und Entformstation (10) jede vertikal unter der Wirkung eines ihnen eigenen Antriebselements zwischen verschiedenen Höhenniveaus verschiebbar sind, wobei das Anstriebselement andererseits für ihre Positionierung in der Höhe gemäß dem gewählten Höhenniveau sorgt.

24. Einrichtung nach einem der Ansprüche 2 bis 23, **dadurch gekennzeichnet, daß** die Wascheinheit (14) aus zwei Reihen von mindestens zwei Preßelementen (77) besteht, die die eine über der anderen angeordnet sind, um einen Kanal zum Zusammendrücken und Ausdehnen der Produkte zu definieren, der einen Produkteinlaß und einen Produktauslasses aufweist, wobei die Preßelemente (77) durch ein Antriebsmittel in Drehung um sich selbst angetrieben sind, um die Produkte im Kanal von dessen Einlaß zum Auslaß zu fördern, wobei die Preßelemente jeder Reihe gegenüber den Preßelementen der anderen Reihe angeordnet und die Preßelemente jeder Reihe von einander entfernt sind, um zwischen sich einen Zwischenraum zu lassen, in dem der geformte Gegenstand sich ausdehnen kann, wobei die Wascheinheit außerdem mit einer Vorrichtung zum Einspritzen eines flüssigen Waschmittels in den oben definierten Zwischenraum ausgerüstet ist, so daß der Gegenstand aus Latex bei seiner Ausdehnung in den Zwischenraum sich mit dem flüssigen Waschmittel beladen kann.

25. Einrichtung nach einem der Ansprüche 2 bis 24, **dadurch gekennzeichnet, daß** die Trockeneinheit (15) aus zwei Reihen von mindestens zwei Preßelementen (85) besteht, welche die eine über der anderen angeordnet sind, um einen Kanal zum Zusammenpressen und Ausdehnen der Produkte zu definieren, der einen Produkteinlaß und einen Produktauslaß aufweist, wobei der Produkteinlaß gegenüber dem Produktauslaß der Wascheinheit ist, die Preßelemente durch eine Antriebsvorrichtung in Drehung um sich selbst angetrieben sind, um die Produkte im Kanal von dessen Einlaß zum Auslaß zu fördern, wobei die Preßelemente jeder Reihe gegenüber den Preßelementen (85) der anderen Reihe angeordnet sind und die Preßelemente (85) jeder Reihe voneinander so entfernt sind, daß sie zwischen sich einen Zwischenraum bilden, in den heiße und trockene Luft durch eine Einblasvorrichtung eingeführt wird, um die Produkte zu trocknen, wobei die Trockeneinheit außerdem mit einer Mikrowellen-Trockeneinheit zusammenwirkt.

26. Einrichtung nach Anspruch 22 oder Anspruch 23, **dadurch gekennzeichnet, daß** die Preßelemente (77), (85) jedes aus einer zylindrischen Walze besteht, die in ihrer Zylinderfläche mit zwei Schraubenrinnen versehen ist, die symmetrisch bezüglich dem mittleren Querschnitt der Walze sind, um den Gegenstand bei seiner Beförderung vom Einlaß zum Auslaß in der Achse des Kanals zu halten.

27. Einrichtung nach einem der Ansprüche 2 bis 26, **dadurch gekennzeichnet, daß** das untere Formelement (2a), das bezüglich seinem Umfangsansatz vorspringt, mit einer geschlossenen Wand (2f) von geringer Dicke versehen ist, welche den oberen Teil der Formhöhlung bildet, wobei der obere Rand dieser geschlossenen Wand (2f) in der Ebene der Dichtung angeordnet ist, und daß gegen diese Oberkante das obere Element (2b) zum Schließen der Form heruntergeklappt wird, wobei die geschlossene Wand ein zum Abschneiden von Formgraten geeignetes Element bildet.

## Claims

1. An installation for manufacturing articles moulded from latex, including moulds (2) into each of which a latex foam is intended to be introduced, an oven (1) of the autoclave type, into the vulcanisation chamber (1a) of which the moulds are intended to be introduced with a view to the vulcanisation of the latex foam which they contain and with a view to the formation of the articles, said installation also including a station (9) for filling the moulds (2) with latex foam, a station (10) for removing the articles from their moulds (2), a unit (14) for washing and a unit (15) for drying the articles removed from the moulds, **characterised in that**:
- the oven vulcanisation chamber is delimited by a jacket (1b) maintained at a distance from the side and top walls of the oven, placed on the bottom wall of the oven, said jacket delimiting with said side and top walls an enclosure (1c), in communication with the vulcanisation chamber through passages provided at the bottom part of the jacket,
- the enclosure (1c) is closed off at the end,
- the oven has in the top part at least one nozzle for introducing steam at high pressure and temperature and at the bottom part at least one nozzle for extracting steam and discharging condensed water, said introduction nozzle being in communication with the enclosure formed around the vulcanisation chamber,
- the vulcanisation chamber (1a) includes a charging opening (5) and a discharge opening (7), opposite to each other, each being able to be closed off by a door (6), (8), with controlled opening and closing movements.

2. An installation according to claim 1, **characterised in that**:
- the moulds (2) are arranged in advance side by side, fixed to at least one horizontal support (3),
- the vulcanisation chamber (1a) of the oven (1) is in the form of a rectilinear tunnel,
- the filling station (9) and the mould-stripping station (10) are disposed adjacent to each other, in line with each other and laterally to the oven (1),
- in line with the vulcanisation chamber (1a) of the oven, opposite the discharge opening (7), there is provided an area (11) for cooling the moulds (2),
- between the filling station (9) and the oven (1), there is provided a first transfer device (12) intended to receive from said filling station the assembly of horizontal support and moulds and to introduce this assembly into the vulcanisation chamber of the oven by passing through the charging opening,
- the oven is equipped in the vulcanisation chamber (1a) with means (33) for positioning the assembly of horizontal support (3) and moulds (2) which provides the holding of said assembly away from the longitudinal vertical and horizontal walls of said chamber, so that the steam, during vulcanisation, can be distributed uniformly in the chamber of the oven around the support frame and mould assembly,
- means are provided for the longitudinal centring of the horizontal support and mould assembly, in the vulcanisation chamber of the oven, before the doors are closed,
- between the cooling area (11) and the mould-stripping station (10) there is provided a second transfer device (13) intended to receive from the cooling area (11) the horizontal support (3) and mould (2) assembly and to transfer it to the mould-stripping station (10),
- the two transfer devices (12), (13) and the cooling area (11) are each formed by a three-dimensional structure provided with at least one horizontal rectilinear support and guidance track (45), (47) parallel to the longitudinal axis of the vulcanisation chamber (1a) of the oven, intended to receive the horizontal support and mould assembly, the cooling area (11) being fixed and the two transfer devices (12), (13) being able to be moved in translation on guide rails (49) by drive means (52), (53), (54), (55) between a position aligned with the filling station (9) and a position aligned with the vulcanisation chamber (1a) of the oven with regard to the first transfer device (12) and between a position aligned with the cooling area (11) and a position aligned with the mould-stripping station (10) with regard to the second transfer device (13),
- said transfer means (12), (13) and said cooling area (11) are equipped with means (56) for propelling the horizontal frame (3) and mould (2) assembly on their respective paths both in the direction of introduction of said assembly on their path and in the direction of the extraction thereof.

3. An installation according to claim 2, **characterised in that** each mould (2) is formed by a bottom mould element (2a) forming a hollow and a top mould element (2b) intended to cover the bottom element and form with the latter a moulding cavity in which, by passing through an aperture formed in the wall of the top element, there is introduced, at the moulding station, latex foam, the two mould elements including a peripheral base (2c), (2d), the peripheral base of the bottom element being wider than the peripheral base of the top element, the mould (2) bearing on the base (2c) of the bottom element (2a), on the horizontal support (3).

4. An installation according to claim 3, **characterised in that** the horizontal support (3) is formed by a support frame formed by two longitudinal members joined by a plurality of cross-members delimiting successively with the longitudinal members cells in which there are disposed the moulds (2), which rest through two opposite sides of the peripheral base (2c) of the bottom element (2a) on the two longitudinal members, and **in that** the bottom mould element is provided with at least one element in the form of a fork intended to be disposed around one of the longitudinal members in order to provide the positioning of said mould with respect to said support.

5. An installation according to any one of the preceding claims, **characterised in that** each closure door (6), (8) of the vulcanisation chamber (1a) of the oven is able to move vertically in vertical runners, fixed to the oven, between a bottom position of opening the vulcanisation chamber of the oven and a top position of closing the vulcanisation chamber of the oven, and is moved between these two positions by at least one drive member (16), on the control circuit of which there is disposed a safety element (17) which, when it is actuated, controls the activation of the drive member (16) in the direction of opening of the door, this safety member being associated with a safety plate (18) fixed to the door and mounted so as to be able to move in vertical translation above the top edge of the door so that an action on this plate directed towards the door results in actuating the safety member and driving the door towards its opening position.

6. An installation according to claim 5, **characterised in that** the drive member (16) is formed by a pneumatic cylinder fixed by its rod to the structure of the oven and by its body to the door of the oven, said cylinder, through its body, being introduced into a vertical housing formed in the door comprising a bottom opening in the bottom edge of the door for the passage of the body and a top opening in the top edge of the door at which there is positioned the safety element (17) which is formed by a valve connected to the rear chamber of the cylinder, said valve, when it is actuated, puts said rear chamber under discharge.

7. An installation according to claim 5 or claim 6, **characterised in that** each door (6) (8) is associated with at least one locking mechanism (23) which provides the locking of its closed position, said locking mechanism being formed on the one hand by a vertical lug (24) with aperture, fixed to the door, and on the other hand by a key (25) fixed to the structure of the element actuated by a drive member (26) between a retracted position in which it is away from the lug and a locking position in which it is engaged in the aperture in the lug.

8. An installation according to any one of the preceding claims, **characterised in that** the oven (1) around each of the openings (5), (7) of the vulcanisation chamber (1a) is equipped with a continuous groove (27) in which there is disposed a seal (28), forming a piston in the groove, said groove being connected to a source of compressed air by means of a solenoid valve, and a position of closing the door, is supplied with compressed air via the solenoid valve, which pushes the seal against the door and provides a seal at this level said groove is also connected via a second solenoid valve to a negative pressure source and is connected to this source before the door is opened so that, under the effect of the suction created, the seal is entirely returned into the groove and is disengaged from the door.

9. An installation according to any one of claims 2 to 8, **characterised in that** the means for positioning (33), in the vulcanisation chamber (1a) of the oven, the assembly of horizontal support (3) and moulds (2) is formed by at least two vertical frames (34) formed by assembling longitudinal members and cross-members, disposed in the vulcanisation chamber (1a) of the oven opposite each other, parallel to the longitudinal axis of the oven, against the vertical internal faces of said chamber, and by at least one horizontal guidance and support path (4) for the horizontal support (3) and mould (2) assembly, fixed to the two frames and extending from one of the two openings to the other, said path being disposed entirely in the interval between the frames so that steam passages are provided between said path and the vertical lateral faces of the vulcanisation chamber of the oven.

10. An installation according to claims 2 and 9 taken together, **characterised in that** the guidance paths (47), (45), (4) of the transfer devices (12), of the cooling areas (11) and of the means (33) of positioning the horizontal support (3) and mould (2) assembly in the vulcanisation chamber (1a) of the oven (1) are all disposed in the same horizontal geometric plane.

11. An installation according to any one of claims 2 to 10, **characterised in that** the guidance path (47) of each transfer device (12), (13), is formed of two series of rollers (48) with the same diameter, disposed facing each other, separated from each other, said rollers being mounted loose, in cantilever, on horizontal shafts, perpendicular to the longitudinal axis of the guidance path, said shafts being fixed by their proximal end to the structure of the transfer device and being disposed in the same horizontal geometric plane.

12. An installation according to any one of claims 2 to 11, **characterised in that** the guidance path (45) of the cooling area (11) is also formed of two series of rollers (46) with the same diameter, disposed opposite each other, separated from each other, said rollers being mounted loose, in cantilever, on horizontal shafts, perpendicular to the longitudinal axis of the guidance path, said shafts being fixed by their proximal end to the structure of the cooling area and being disposed in the same horizontal geometric plane.

13. An installation according to claim 9 or claim 10, **characterised in that** the guidance path (4) of the means (33) for positioning the horizontal support (3) and mould (2) assembly is formed by two series of rollers (36) with the same diameter, disposed opposite each other, separated from each other, said rollers being mounted loose, in cantilever, on horizontal shafts, perpendicular to the longitudinal axis of the guidance path, the said shafts being fixed by their proximal end to the cross-members of the frames of the positioning means and being disposed in the same horizontal geometric plane.

14. An installation according to any one of claims 2 to 13, **characterised in that** the propulsion means (56) of each transfer device (12), (13) and of the cooling area (11) is formed of at least one roller (57) tangent to the guidance path (47), (45), coupled to the output shaft of a drive member (58) fixed to a chassis secured to the structure of the transfer device or of the cooling area, said roller, through its rotation axis, being perpendicular to said guidance path and coming to be pressed against one of the longitudinal members of the support element (3) so that, by rotation about its axis, it imparts to the support element a translation movement on the guidance path.

15. An installation according to any one of claims 2 to 14, **characterised in that** the means for longitudinal centring of the horizontal support and mould assembly, in the vulcanisation chamber of the oven before closure of the doors, comprises a thrust assembly (59) fixed to the front end of the first transfer device (12) and a stop assembly (6) fixed to the oven (1), and disposed adjacent to the discharge opening (7), said thrust (59) and stop (60) assemblies being each actuated by at least one drive means (59a), (66), (68) between a retraction position in which they are disengaged from the path of the horizontal support (3) and mould (2) assembly and an active position according to which they are secant to said path and disposed in the vulcanisation chamber (1a) of the oven (1) separated from the openings (5), (7) so as to disengage the support (3) and mould (2) assembly from the path of the doors (6) and (8), said thrust element (59) being active after the horizontal support and mould assembly has left the rails of the transfer device in order to come to act under thrust on the rear end of the horizontal support and to bring the front end of said support in abutment against the stop element (6) previously disposed in its active position.

16. An installation according to claim 15, **characterised in that** the thrust assembly (59) is formed by a vertical bar (61) mounted at the end of an arm structure (62) fixed to a vertical shaft (63) mounted free with respect to rotation and fixed with respect to translation in bearings of the structure of the first transfer means (12), said shaft being coupled to the drive means (59a).

17. An installation according to claim 15, **characterised in that** the stop assembly (60) includes a vertical plate (64) fixed to one of the vertical lateral sides of the oven and parallel to said sides, carrying a first stop element (65), able to move under the action of a first drive member (66) parallel to the discharge opening of the vulcanisation chamber (1a) of the oven, between a retraction position in which it is disposed so as to be recessed laterally with respect to the path of the horizontal support and mould assembly and an activation position in which it is secant to said path, said first stop element (65) supporting a second stop element (67), able to move in translation under the action of a second drive member (68) perpendicular to the opening of the vulcanisation chamber (1a) of the oven, between a recessed position in which it is outside the vulcanisation chamber of the oven and in front of the discharge opening and an activation position in which it is in the vulcanisation chamber of the oven and behind the opening.

18. An installation according to claim 17, **characterised in that**:
- the first stop element (65) includes:
- a vertical plate (69) provided with two flanges, the first of which is perpendicular to the plane of the discharge opening (7) and the second parallel to the second opening and carries the second stop element (67),
- two horizontal guidance runners (70), parallel to the discharge opening (7), disposed one above the other, each fixed by one of their ends to the first flange of the plate (69) and slidably engaged in two bearings for guidance in translation fixed to the support plate (64),
- a pneumatic cylinder forming the first drive member (66), said cylinder extending horizontally between the support plate (64) and the first flange of the plate (69) of the first element and being fixed by its body to the support plate (64) and by its rod to the vertical flange of the plate (69) of the first element,
- and the second stop element (67) includes:
- a vertical stop bar (71),
- two horizontal guidance runners (72), perpendicular to the discharge opening (7), disposed one above the other, each fixed by one of their ends to the stop bar (71) and slidably engaged in two bearings for guidance in translation, fixed to the second flange of the plate (69) of the first element (65),
- a pneumatic cylinder forming the second drive member (68), said cylinder extending horizontally between the stop bar and the second flange of the plate (69) of the first element (65) and being fixed by its body to said second flange and by its rod to the stop bar (71).

19. An installation according to any one of claims 2 to 18, **characterised in that** the filling station (9) is formed with a horizontal vessel (39), with a U-shaped cross-section, open at the end and including, along its longitudinal axis, between its vertical flanges (40), a horizontal guidance path (41) for holding the horizontal support (3) and mould (2) assembly, said guidance path (41) being open at the end and said guidance path and the guidance paths of the transfer devices (12), (13), of the cooling area (11) and of the vulcanisation chamber (1a) of the oven (1) being coplanar.

20. An installation according to claim 19, **characterised in that** the guidance path (41) of the filling station (9) is formed with two series of rollers (42) with the same diameter, disposed facing each other, separated from each other, one of which is carried by one of the vertical flanges of the vessel and the other series by the other flange, each roller in each series being mounted loose, in cantilever, on a horizontal shaft, perpendicular to the longitudinal shaft of the guidance path, said shaft being fixed by its proximal end to the corresponding flange.

21. An installation according to any one of claims 2 to 20, **characterised in that** the mould-stripping station (10) is provided with two longitudinal vertical flanges (43), separated from each other, between which there is provided a path (44) for the horizontal guidance and holding of a support (3) and mould (2) assembly, said guidance path being open at the end, said guidance path and the guidance paths of the transfer devices (12), (13), of the filling station (9) of the cooling area (11) and of the vulcanisation chamber (1a) of the oven being coplanar, said guidance path being disposed in line with the guidance path of the filling station.

22. An installation according to claim 21, **characterised in that** the guidance path (44) of the mould-stripping station (9) consists of two series of rollers (44a) with the same diameter, disposed facing each other, separated from each other, one of which is carried by one of the vertical flanges (43) of the mould-stripping station and the other series by the other flange, each roller in each series being mounted loose, in cantilever, on a horizontal shaft, perpendicular to the longitudinal shaft of the guidance path, said shaft being fixed by its proximal end to the corresponding flange.

23. An installation according to any one of the preceding claims, **characterised in that** the vulcanisation chamber (1a) of the oven is equipped with several guidance and holding paths arranged at several height levels in order to simultaneously receive several horizontal support and mould assemblies, **in that**, at each of these height levels, the transfer devices (12), (13) and the cooling area (11) each include a path for guiding and holding a horizontal support and mould assembly and **in that** the filling (9) and mould-stripping (10) stations are each able to move in vertical translation between the various height levels under the action of a drive means which is peculiar to them, said drive means moreover providing their positioning for height according to the height level chosen.

24. An installation according to any one of claims 2 to 23, **characterised in that** the washing unit (14) is formed by two series of at least two pressing members (77), mounted one above the other, in order to define a product pressing and expansion channel, including a product entry and a product exit, said pressing members (77) being driven in rotation on themselves by a drive means in order to drive the products in the channel from the entry of the latter to the exit, the pressing members in each series being disposed in line with the pressing members in the other and the pressing members in each series being separated from each other so as to form between them a gap in which the moulded article can expand, said washing unit also being equipped with means for injecting a liquid washing agent into the above-mentioned gap so that the latex article, when it expands in said gap, can be loaded with liquid washing agent.

25. An installation according to any one of claims 2 to 24, **characterised in that** the drying unit (15) is formed by two series of at least two pressing members (85), mounted one above the other, in order to define a product pressing and expansion channel, including a product entry and a product exit, said product entry being opposite the exit for the products of the washing unit, the pressing members being driven in rotation on themselves by a drive means in order to drive the product through the channel from the entry of the latter to the exit, the pressing members in each series being disposed in line with the pressing members (85) in the other and the pressing members (85) in each series being separated from each other so as to form between them a gap into which hot dry air is introduced by an injection means so as to dry the products, said drying unit also being associated with a microwave dryer.

26. An installation according to claim 22 or claim 23, **characterised in that** the pressing members (77), (85) each is formed of a cylindrical roller, provided with two helical grooves cut in its cylindrical face, said grooves being symmetrical with respect to the median cross-section of the roller so as to maintain the article in the axis of the channel when it is driven from the entry to the exit.

27. An installation according to any one of claims 2 to 26, **characterised in that** the bottom moulding element (2a), projecting with respect to its peripheral base, is provided with a thin endless wall (2f), forming the top part of the moulding cavity, **in that** the top edge of this endless wall (2f) is disposed in the joint face and **in that**, against this top edge, there is folded the top element (2b) for closure of the mould, said endless wall constituting the element able to cut the burrs.
